# EUROPÄISCHE PATENTSCHRIFT

(11) **EP 3 601 501 B1**
(45) Veröffentlichungstag und Bekanntmachung des Hinweises auf die Patenterteilung: **23.03.2022**
(21) Anmeldenummer: 18719455.0
(22) Anmeldetag: 03.04.2018
(51) Int. Cl.: C10M 105/34, C09K 8/00, F17D 1/16, C10G 1/04, B09C 1/02, F17D 1/17, C10G 75/04, C09K 8/52, C10N 30/00, C10N 30/02

(54) **ZUSAMMENSETZUNG ZUR VERRINGERUNG DER VISKOSITÄT VON ERDÖL UND ERDÖLRÜCKSTÄNDEN SOWIE ZUM LÖSEN UND TRENNEN VON ERDÖL UND/ODER ERDÖLRÜCKSTÄNDEN VON ANDEREN FLÜSSIGEN UND/ODER FESTEN STOFFEN**
COMPOSITION FOR REDUCING THE VISCOSITY OF CRUDE OIL AND CRUDE OIL RESIDUES AS WELL AS FOR LOOSENING AND SEPARATING CRUDE OIL AND/OR CRUDE OIL RESIDUES FROM OTHER LIQUID AND/OR SOLID SUBSTANCES
COMPOSITION PERMETTANT DE RÉDUIRE LA VISCOSITÉ DE PÉTROLE OU DE RÉSIDUS DE PÉTROLE AINSI QUE DE DISSOUDRE ET DE SÉPARER DU PÉTROLE ET/OU DES RÉSIDUS DE PÉTROLE PRÉSENTS DANS D'AUTRES SUBSTANCES LIQUIDES ET/OU SOLIDES

(30) Priorität: 31.03.2017 DE 102017107038
(43) Veröffentlichungstag der Anmeldung: 05.02.2020
(73) Patentinhaber: Völklein, Winfried, 89269 Vöhringen (DE)
(72) Erfinder: CREMER, René, 50181 Bedburg (DE); NORDT, Christian-Helmut, 41363 Jüchen (DE)
(74) Vertreter: DREISS Patentanwälte PartG mbB
(86) Internationale Anmeldenummer: PCT/EP2018/058507
(87) Internationale Veröffentlichungsnummer: WO 2018/178402

(56) Entgegenhaltungen:
- WO-A1-03/055960
- WO-A2-2013/116766
- WO-A2-2013/177162
- DE-A1- 19 737 071
- US-A1- 2004 144 957
- US-A1- 2016 102 241
- Wei Li ET AL: "Ruthenium complexes of tetradentate bipyridine ligands: highly efficient catalysts for the hydrogenation of carboxylic esters and lactonesElectronic supplementary information (ESI) available: Experimental procedures; spectral data for all new compounds. CCDC 9907981b. For ESI and crystallographic da", , 18. August 2014 (2014-08-18), Seiten 481-485, XP055518991, DOI: 10.1039/c4gc00835a Gefunden im Internet: URL:http://www.rsc.org/suppdata/gc/c4/c4gc 00835a/c4gc00835a1.pdf [gefunden am 2018-10-25]

## Beschreibung

Die vorliegende Erfindung betrifft eine Zusammensetzung zur Reduzierung der Viskosität von Erdöl und Erdölrückständen.

Ferner betrifft die vorliegende Erfindung verschiedene Verwendungen der erfindungsgemäßen Zusammensetzung sowie verschiedene Verfahren, die von den erfindungsgemäßen Zusammensetzung Gebrauch machen.

Die erfindungsgemäße Zusammensetzung vereinfacht unter anderem die Förderung von schwer zu förderndem Erdöl und vereinfacht und verbessert zum Beispiel den Transport und die Verarbeitung von Erdöl. Außerdem ist die erfindungsgemäße Zusammensetzung einsetzbar, um Erdöl und/oder Erdölrückstände von anderen flüssigen und/oder festen Stoffen zu lösen oder zu trennen.

Schließlich betrifft die Erfindung auch eine Mischung, in der die Zusammensetzung Verwendung findet.

### Hintergrund der Erfindung

Trotz der Entwicklung von regenerativen Energiequellen steigt die weltweite Nachfrage nach Erdöl stetig. Erdöl dient nicht nur als Energieträger, sondern auch als wichtiger Rohstoff, unter anderem für die chemische Industrie, wobei besondere Reinheit wichtig ist, insbesondere für die Herstellung von lebensmittelechtem Kunststoff und medizinischtechnischen Produkten. Insbesondere deswegen wird die Nachfrage nach Erdöl, unabhängig von der Entwicklung regenerativer Energiequellen, langfristig bestehen bleiben. Aufgrund der ständig steigenden Nachfrage und der Verknappung einfach zu fördernder (konventioneller) Erdölvorkommen, sowie geographischer und geopolitischer Umstände, wird die Förderung schwer zu fördernder (unkonventioneller) Erdölvorkommen immer wichtiger. Zu diesen unkonventionellen Erdölvorkommen gehören zum Beispiel Schweröle, natürliche Bitumen und Ölsand. Ebenso steigt das Interesse, bereits erschlossene konventionelle Erdölvorkommen über die Primärförderung hinaus in einer aufwändigeren Sekundär- und Tertiärförderung vollständig zu fördern.

Die Viskosität von Erdöl variiert in erheblichem Maße. Je höher die Viskosität desto größer ist typischerweise der Aufwand der mit der Erdölförderung, dem Erdöltransport, sowie der Erdölverarbeitung verbunden ist. Im Allgemeinen gilt, je höher die Viskosität, desto schwieriger ist es, das Erdöl zu lösen und zu bewegen, sei es, zum Beispiel, aus dem Erdreich an die Oberfläche oder durch Pipelines. Den meisten unkonventionellen Erdölvorkommen ist gemein, dass sie im Vergleich zu konventionellen Erdölvorkommen eine höhere Viskosität besitzen. Auch die in der Sekundär- und Tertiärförderung noch zu gewinnenden Erdölvorkommen zeichnen sich durch eine erhöhte Viskosität aus.

Derzeit gebräuchliche Verfahren zur Förderung unkonventioneller Erdölvorkommen, zum Beispiel die Förderung von Erdöl aus Ölsand, und zur Sekundär- und Tertiärförderung, bedienen sich häufig der Verwendung von heißem Wasserdampf, optional in Verbindung mit verschiedenen Chemikalien, um unter anderem die Viskosität des zu fördernden Erdöls zu reduzieren. Dabei wird zum Beispiel heißer Wasserdampf durch eine Injektionsbohrung in das Erdreich gepresst, wodurch unter anderem die Viskosität des abgelagerten Erdöls reduziert wird, um es so an die Oberfläche fördern zu können.

Diese Verfahren sind häufig unter anderem sehr energie- und kostenintensiv und unter anderem aufgrund der verschiedenen verwendeten Chemikalien umweltschädlich. Weiterhin muss das gewonnene Erdöl unter anderem von den injizierten wässrigen Komponenten, in oft aufwendigen Verfahren, getrennt werden. Die dabei erhaltenen kontaminierten Abwässer müssen entsorgt und als Sondermüll kostenintensiv gelagert werden.

Eine weitere Herausforderung bei der Förderung, beim Transport und bei der Verarbeitung von Erdöl ist die Bildung von hochviskosen Erdölrückständen. Solche Erdölrückstände, zum Beispiel Ölschlamm (auch Sludge genannt), bilden sich häufig in Erdöltanks, Leitungen, Rohren und Pipelines. Erdölrückstände können den Transport und die Verarbeitung von Erdöl erheblich stören. So müssen zum Beispiel Erdölpipelines regelmäßig gewartet und von Erdölrückständen und/oder Ablagerungen, zum Beispiel Paraffinen, befreit werden, um den nötigen Leitungsquerschnitt zu erhalten, insbesondere wenn Schwerrohöl in den Pipelines transportiert wird. Ebenso müssen Erdöltanks regelmäßig von hochviskosen Erdölrückständen, zum Beispiel Schlämmen, befreit werden, die sich im Laufe der Zeit bilden, damit diese Erdölrückstände nicht den Auslass des Erdöltanks blockieren. Ein in der Erdölindustrie bis dato ungelöstes Problem ist das umweltfreundliche Entfernen dieser Erdölrückstände.

Derzeit ist das gebräuchliche Verfahren für die Entfernung von zum Beispiel hochviskosen Erdölrückständen, z. B. Schlämmen oder Schlacken, in Lagertanks, die mechanische und chemische Bearbeitung in regelmäßigen Intervallen, bevor die Tanks erneut mit Erdöl befüllt werden. Diese Rückstände müssen, vergleichbar wie mit z.B. Teer oder Bitumen, entsorgt werden, was umfangreiche Umsatzeinbußen und Belastungen für die Umwelt mit sich bringt. US 2016 / 102 241 A1 und WO 2013 / 177 162 A2 offenbaren jeweils eine Zusammensetzung mit Merkmalen des Anspruchs 1.

Aus den oben genannten Gründen besteht großes Interesse daran, verbesserte Mittel und Verfahren zu entwickeln, um unter anderem die Viskosität von Erdöl und/oder Erdölrückständen zu verringern und/oder Erdöl und Erdölrückstände von anderen flüssigen oder festen Stoffen zu lösen und/oder zu trennen.

Dementsprechend ist es eine Aufgabe der vorliegenden Erfindung, eine Zusammensetzung zur Verfügung zu stellen, die es erlaubt, die Viskosität von Erdöl und Erdölrückständen zu reduzieren, um die Förderung, den Transport, die Verarbeitung und die Lagerung von Erdöl zu verbessern. Insbesondere ist es Aufgabe der vorliegenden Erfindung mittels einer solchen Zusammensetzung die Förderung von Erdöl, insbesondere unkonventioneller aber auch konventioneller Erdölvorkommen, zu erleichtern und zu ermöglichen sowie die Bildung von Erdölrückständen zu verhindern bzw. gebildete Erdölrückstände zu entfernen. Ein Hauptaugenmerk liegt darauf, dass die Ölförderung und die Weiterverarbeitung von Erdöl umweltschonender und umweltfreundlicher gestaltet werden.

Des Weiteren ist es eine eigenständige Aufgabe der vorliegenden Erfindung eine Zusammensetzung zur Aufbereitung von Sand bereitzustellen.

### Zusammenfassung der Erfindung

Die Erfindung betrifft eine Zusammensetzung, die eine Fettsäureesterfraktion und eine Alkoholfraktion umfasst.

Die Fettsäureesterfraktion kann beispielsweise 70, 75, 80, 85, 90 oder 95 Gew.-% und die Alkoholfraktion kann beispielsweise 30, 25, 20, 15, 10 oder 5 Gew.-% der Zusammensetzung ausmachen.

Denkbar wäre beispielsweise, dass die Zusammensetzung 75 Gew.-% der Fettsäureesterfraktion und 25 Gew.-% der Alkoholfraktion, 80 Gew.-% der Fettsäureesterfraktion und 20 Gew.-% der Alkoholfraktion, oder 90 Gew.-% der Fettsäureesterfraktion und 10 Gew.-% der Alkoholfraktion enthält. Denkbar ist auch jede andere prozentuale Kombination aus Fettsäureesterfraktion und Alkoholfraktion, insbesondere mit den im vorhergehenden Absatz genannten Werten für die Anteile der beiden Fraktionen, wobei die Zusammensetzung ggf. weitere Komponenten enthalten kann, so dass sich die prozentualen Anteile der Fettsäureesterfraktion und der Alkoholfraktion nicht zu 100% addieren müssen, vorteilhafterweise sich zusammen jedoch zu 100% addieren (also keine weiteren Komponenten umfasst).

Die Fettsäureesterfraktion kann einen oder mehrere C16-C18-Fettsäureester, insbesondere einen oder mehrere ungesättigte C18-Fettsäuremethylester, umfassen.

In einer bevorzugten Ausführungsform umfasst die Fettsäureesterfraktion einen oder mehrere Fettsäuremethylester einer Gruppe, die aus Hexadecansäuremethylester, Octadecansäuremethylester, 9-Octadecensäuremethylester, 9,12-Octadecadiensäuremethylester und 9,12,15-Octadecatrieensäuremethylester besteht.

In einer weiteren bevorzugten Ausführungsform umfasst die Fettsäureesterfraktion einen oder mehrere Biodiesel. Besonders bevorzugt sind Biodiesel, die hergestellt sind aus Soja und/oder Raps und/oder aus Frittier-/Koch-fett/-Öl, vorzugsweise das überwiegend aus pflanzlichen Fetten/Substanzen besteht, bspw. wie es im asiatischen Raum häufig verwendet wird.

Im Sinne der Erfindung ist auch, dass die Fettsäureesterfraktion wenigstens ein nicht-raffiniertes, verestertes Pflanzenöl und/oder Pflanzenfett umfasst.

In einer weiteren Ausführungsform umfasst die Alkoholfraktion iso-Propanol und/oder Ethanol. Der Ethanol kann Bio-Ethanol und/oder Technisches Ethanol und/oder technisches Bio-Ethanol und/oder vergälltes Bio-Ethanol umfassen.

In einer weiteren Ausführungsform umfasst die Zusammensetzung weiterhin Campher. Vorzugsweise beträgt die Menge an Campher in der Zusammensetzung wenigstens 0,5 mg/L, insbesondere 1 mg/L, insbesondere 2 mg/L, insbesondere 3 mg/L, insbesondere 4 mg/L, insbesondere 5 mg/L bezogen auf die Gesamtmenge der Zusammensetzung. Vorzugsweise beträgt die Menge an Campher in der Zusammensetzung höchstens 20 mg/L, insbesondere 10 mg/L, insbesondere 8 mg/L, insbesondere 7 mg/L, insbesondere 6 mg/L, bezogen auf die Gesamtmenge der Zusammensetzung.

Der jeweilige Gesamt-Campher-Anteil kann zunächst in einem Teil der jeweiligen Alkoholfraktion gelöst werden, dann kann diese Campher-Lösung der Fettsäureesterfraktion zugeführt werden und anschließend kann mit der jeweiligen Rest-Alkoholfraktion die endgültige Zusammensetzung erhalten werden.

Bevorzugt ist insbesondere eine Ausführungsform der Zusammensetzung, die 70- 90 Gew.-%, vorzugsweise 75 - 85 Gew.-% Biodiesel sowie entsprechend 10-30 Gew.-%, vorzugsweise 15-25 Gew.-% technischen Bio-Ethanol umfasst, wobei die Zusammensetzung zusätzlich 0,5 - 20 mg/L, insbesondere 4 - 10 mg/L, insbesondere 4,5 - 7 mg/L Campher umfassen kann. Bspw. kann die Zusammensetzung aus 80 Gew.-% Biodiesel, 20 Gew.-% technischem Bio-Ethanol sowie 5,55 mg/L Campher bestehen. Bevorzugt ist auch eine Zusammensetzung aus 90 Gew.-% Biodiesel, 10 Gew.-% technischem Bio-Ethanol sowie zusätzlich 5,55 mg/L Campher.

Bevorzugt ist auch eine Ausführungsform der Zusammensetzung, die 80- 95 Gew.-%, vorzugsweise 85 - 93 Gew.-% Biodiesel sowie entsprechend 3-25 Gew.-%, vorzugsweise 5-20 Gew.-%, vorzugsweise 7-15 Gew.-%, iso-Propanol umfasst, wobei die Zusammensetzung zusätzlich 0,5 - 20 mg/L, insbesondere 4 - 10 mg/L, insbesondere 4,5 - 7 mg/L Campher umfassen kann. Bspw. kann die Zusammensetzung aus 90,0 Gew.-% Biodiesel, 10,0 Gew.-% iso-Propanol sowie 5,5 mg/L Campher bestehen.

Bevorzugt ist auch eine Ausführungsform der Zusammensetzung, die 70- 90 Gew.-%, vorzugsweise 75 - 85 Gew.-% Biodiesel sowie entsprechend 10-30 Gew.-%, vorzugsweise 15-25 Gew.-%, iso-Propanol umfasst, wobei die Zusammensetzung zusätzlich 3 - 20 mg/L, insbesondere 4 - 10 mg/L, insbesondere 4,5 - 7 mg/L Campher umfassen kann. Bspw. kann die Zusammensetzung aus 80,0 Gew.-% Biodiesel, 20,0 Gew.-% iso-Propanol sowie 5,5 mg/L Campher bestehen.

Es wurde überraschender Weise festgestellt, dass die erfindungsgemäße Zusammensetzung bzw. deren spezielle Ausführungsformen die Viskosität von Erdöl und Erdölrückständen unerwartet stark verringert. Verringerung der Viskosität von Erdöl ermöglicht oder vereinfacht die Förderung von Erdöl, zum Beispiel dadurch, dass das Erdöl in einen pumpfähigen Zustand überführt wird, der es ermöglicht, dass das Erdöl aus der Erdöllagerstätte an die Oberfläche gepumpt werden kann.

Die Verringerung der Viskosität von Erdöl mittels der erfindungsgemäßen Zusammensetzung vereinfacht des Weiteren den Transport von Erdöl, zum Beispiel von der Erdölquelle zu den Raffinerien, eine Strecke, die oft mehrere tausend Kilometer beträgt, zum Beispiel mittels einer Pipeline, da die Verringerung der Viskosität die Fließeigenschaften des Erdöls verbessert und die Tendenz zu Ablagerungen in der Pipeline reduziert.

Die erfindungsgemäße Zusammensetzung zeichnet sich insbesondere dadurch aus, dass sie im Wesentlichen bei schon im Stand der Technik vorhandenen Vorrichtungen und Apparaturen zur Förderung, zum Transport und zur Verarbeitung von Erdöl verwendet werden kann und somit keine zwingend notwendigen Neuinvestitionen getätigt werden müssen. Insbesondere sind keine der Raffination vor- oder nachgeschalteter Trennungsprozesse zur Trennung des Erdöls von der erfindungsgemäßen Zusammensetzung mehr zwingend notwendig. Des Weiteren lässt sich die Fettsäureesterfraktion vollständig aus regenerativen Quellen, wie zum Beispiel Soja oder Raps oder aus Frittier-/Koch-fett/-Öl bevorzugt, vorzugsweise das überwiegend aus pflanzlichen Fetten/Substanzen besteht (wie es häufig im asiatischen Raum Verwendung findet), gewinnen. Die erfindungsgemäße Zusammensetzung bietet somit also eine umweltfreundliche Lösung der oben genannten Probleme.

Die Erfindung betrifft ferner die Verwendung der erfindungsgemäßen Zusammensetzung zur Verringerung der Viskosität von Erdöl oder Erdölrückständen, insbesondere Rohöl, Schwerrohöl, Ölschlamm und Bitumen. Die Verringerung der Viskosität von Erdöl oder Erdölrückständen ist mit zahlreichen Vorteilen bei der Förderung, dem Transport, der Lagerung und der Verarbeitung von Erdöl verbunden.

Ebenso betrifft die Erfindung ein Verfahren zur Entfernung von Erdölrückständen von einer Oberfläche, umfassend die Schritte: In Kontakt bringen der erfindungsgemäßen Zusammensetzung mit den Erdölrückständen, Inkubation der Zusammensetzung mit den auf der Oberfläche vorhandenen Erdölrückständen, um ein Produkt mit verringerter Viskosität zu erhalten, und Entfernen des Produkts von der Oberfläche.

In einer bevorzugten Ausführungsform ist die Oberfläche ein Erdöltank, zum Beispiel aus einem Tanker oder Kesselwagen, wobei das Verfahren die Schritte a) Einbringen der erfindungsgemäßen Zusammensetzung in einen Erdöltank, zum Beispiel Tanker oder Kesselwagen, b) Inkubation der eingebrachten Zusammensetzung mit im Erdöltank, z. B. Tanker oder Kesselwagen, vorhandenen Erdölrückständen, um ein Produkt mit verringerter Viskosität zu erhalten, und c) Entfernen des Produkts aus dem Tank, z. B. Tanker oder Kesselwagen, umfasst. Erdölrückstände werden dadurch aus dem Erdöltank oder von der Oberfläche entfernt, das heißt der Erdöltank oder die Oberfläche so gesäubert, dass die erfindungsgemäße Zusammensetzung die im Erdöltank oder auf der Oberfläche vorhandenen Erdölrückstände löst bzw. deren Viskosität verringert.

Die Verwendung der erfindungsgemäßen Zusammensetzung in der Säuberung zum Beispiel eines Erdöltanks bietet zum Beispiel die Möglichkeit, den Tank im Normalbetrieb, das heißt, ohne Abschalten des Tanks, zu säubern, wenn die erfindungsgemäße Zusammensetzung in ausreichender Menge, das heißt, einer Menge, die die Viskosität der vorhandenen Erdölrückstände soweit verringert, dass das erhaltene Produkt entfernt werden kann, zum Beispiel durch Abpumpen, hinzugefügt wird. Die so durch Verringerung der Viskosität gelösten und entfernbaren Erdölrückstände können zum Beispiel dem Raffinationsprozess zugeführt werden und müssen nicht, wie bei den Verfahren des Standes der Technik, aufwändig entsorgt werden. Die Lösung von Erdölrückständen in einem Erdöltank mittels der erfindungsgemäßen Zusammensetzung bietet somit also wirtschaftliche Vorteile, unter anderem, da der Erdöltank vor der Reinigung nicht notwendigerweise abgeschaltet, oder vollständig entleert, werden muss und weil die Reinigung mit der erfindungsgemäßen Zusammensetzung rascher abläuft als gemäß dem Stand der Technik. Ferner stellt die Reinigung mit der erfindungsgemäßen Zusammensetzung eine umweltfreundliche Weiterentwicklung dar, weil die erhaltenen gelösten Erdölrückstände in Kombination mit der erfindungsgemäßen Zusammensetzung wenigstens teilweise weiterverarbeitet werden und nicht vollständig entsorgt werden müssen.

Bei den erfindungsgemäßen Verfahren wird in bevorzugten Ausführungsformen während der Inkubation mechanisch auf die Zusammensetzung und die Erdölrückstände eingewirkt, vorzugsweise durch Rühren, Rütteln, Schwenken oder ähnliche mechanische Stimulation.

Ferner ist eine Inkubation bevorzugt, bei welcher der Tankboden bis auf 60°C erwärmt wird. Bis zu dieser Temperatur fallen keine übermäßigen Energiekosten an und die natürlichen Ölmikroben und Öl-Enzyme bleiben dem Erdöl erfahrungsgemäß in seiner Charakteristik erhalten.

Bei den erfindungsgemäßen Verfahren wird die Zusammensetzung bevorzugt mit einem Sprühdruck aufgebracht. Der Sprühdruck beträgt vorzugsweise wenigstens 2 bar, insbesondere wenigstens 4 bar, insbesondere wenigstens 6 bar, insbesondere wenigstens 8 bar, insbesondere wenigstens 10°bar. Der Sprühdruck beträgt weiter vorzugsweise höchstens 110 bar, vorzugsweise höchstens 100 bar, vorzugsweise höchstens 80 bar, vorzugsweise höchstens 70 bar, vorzugsweise höchstens 60 bar, vorzugsweise höchstens 50 bar. Denkbar ist die Verwendung eines Hochdruckreinigers.

Die angegebenen Druckbereiche sind materialschonend und erlauben dennoch eine gute Reinigung. Handpumpen, die in den Beispielen verwendet wurden, um Erdölrückstände von Metallplatten zu entfernen, weisen bspw. einen Druck von knapp 3 bar auf. Im manchen Verfahren kann bspw. ein Sprühdruck zwischen 10 bar und 55 bar verwendet werden, um Erdölrückstände aus einem Erdöltank zu entfernen.

Weiterhin betrifft die Erfindung ein Verfahren zur Förderung von Erdöl, wobei das Verfahren die Injektion der erfindungsgemäßen Zusammensetzung in eine Erdöllagerstätte umfasst. Durch die Injektion der erfindungsgemäßen Zusammensetzung kann die Viskosität der in der Erdöllagestätte gespeicherten Erdölvorkommen verringert werden, und möglicherweise vorhandenes gebundenes Erdöl vorab gelöst, um anschließend ein Pumpen des Erdöls an die Oberfläche zu ermöglichen oder zu erleichtern. Dies ist insbesondere, jedoch nicht ausschließlich, im Rahmen der tertiären Erdölforderung von Vorteil, da in diesem Stadium der Erdölförderung vor allem hochviskose Erdöle gefördert werden.

Beispielhaft sei hier erwähnt, dass alle Erdöllagerstätten (Oil-wells), bevorzugt die ohne - oder nur mit geringem - Druck, für die Anwendung des erfindungsgemäßen Verfahrens zur Förderung von Erdöl in Frage kommen. Meistens werden die "Restvorkommen", welche zum Sekundär - oder Tertiärabbau zählen, mittels Salzwasser, das unter die "Öl-Sohle" gepumpt wird, gestützt. Die erfindungsgemäße Zusammensetzung verbindet sich nicht mit Wasser oder Salzwasser. Die erfindungsgemäße Zusammensetzung ist nicht nur für den Sekundär- und Tertiärabbau von gehärtetem Erdöl gedacht, sondern dient auch dem Abbau und dem Lösen und Trennen von Öl aus Öl-Sand, Öl-Seen (Oil-Ponds/ausgehärtet), Öl-Schlämme und Öl-Schlacke. Zu den unkonventionellen Erdölvorkommen, wie oben beschrieben, zählen auch gebundene Erdölvorkommen in Flüssigkeiten oder Feststoffen.

Die Erfindung betrifft auch ein Verfahren zur Förderung von Erdöl, wobei das Verfahren die Schritte a) In Kontakt bringen eines Ölsands mit der erfindungsgemäßen Zusammensetzung, b) Inkubation der Zusammensetzung mit dem Ölsand, um das im Ölsand gebundene Erdöl zu lösen, und c) Trennung des gelösten Erdöls von Feststoffen, umfasst.

### Es zeigen:

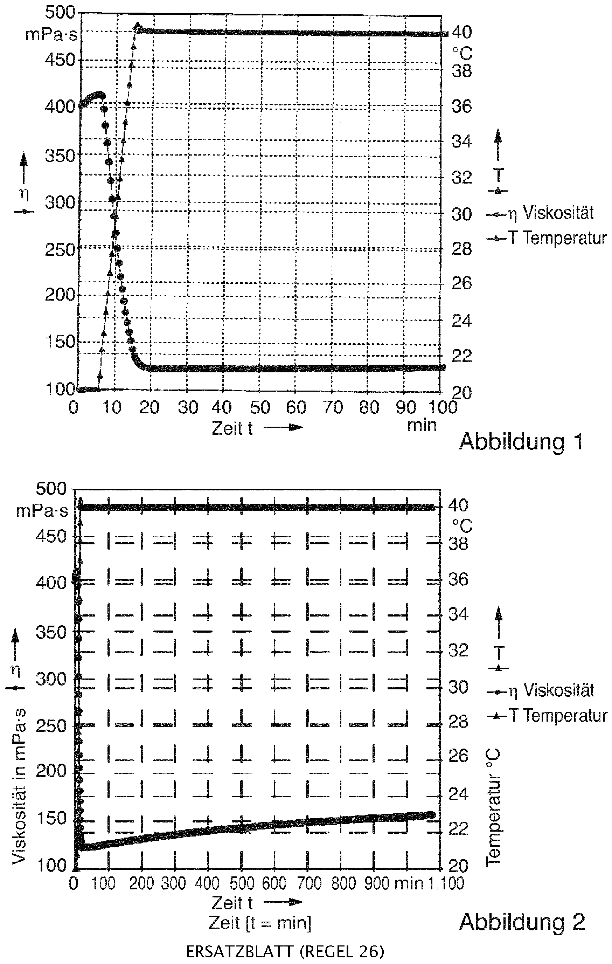

Abbildung 1 zeigt die Abnahme der Viskosität in Rohöl durch Zugabe einer Ausführungsform der erfindungsgemäßen Zusammensetzung (Arbeitsbezeichnung A1111 mit der Zusammensetzung 90 Gew.-% Biodiesel (Soja), 10 Gew.-% technisches Bio-Ethanol und 5,5 mg/L Campher): Nach einer Einwirkzeit von 20 Minuten wird die Temperatur auf 40°C erhöht und danach über 80 Minuten konstant gehalten. Die Viskosität nimmt von über 400 mPa•s auf 130 mPa•s ab.

Abbildung 2 zeigt denselben Test wie in Abbildung 1, hier im Ausschnitt der gezeigten Messzeit von mehr als 18 Stunden (Langzeittest). Der Anstieg der Kurve sättigt sich nach 16 Stunden bei einem Wert von etwas über 150 mPa•s. Abbildung 2 zeigt somit die langanhaltende Stabilität der Absenkung der Viskosität.

Für die Experimente der Abbildungen 1 und 2 wurden jeweils 18,1 g Rohöl mit 2,0 g Verflüssiger A1111 (Zusammensetzung aus 90 Gew.-% Biodiesel (Soja), 10 Gew.-% technisches Bio-Ethanol und 5,5 mg/L Campher) vermischt.

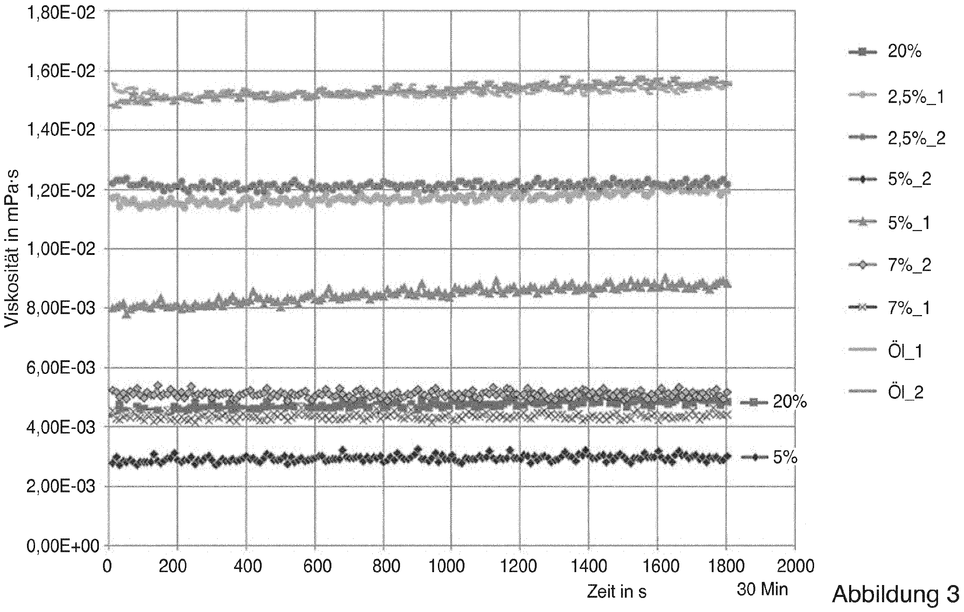

Abbildung 3 zeigt die Viskosität, erhalten für verschiedene Mischungen von deutschem Rohöl, mit einer erfindungsgemäßen Zusammensetzung bei 59,5°C. Die geringste Viskosität (die größte Viskositätserniedrigung) zeigt sich für 5%-igem Zusatz der erfindungsgemäßen Zusammensetzung. Auch ein 7%-iger Zusatz führt zu einer weit niedrigeren Viskosität als ein 20%-iger oder 2,5%iger Zusatz.

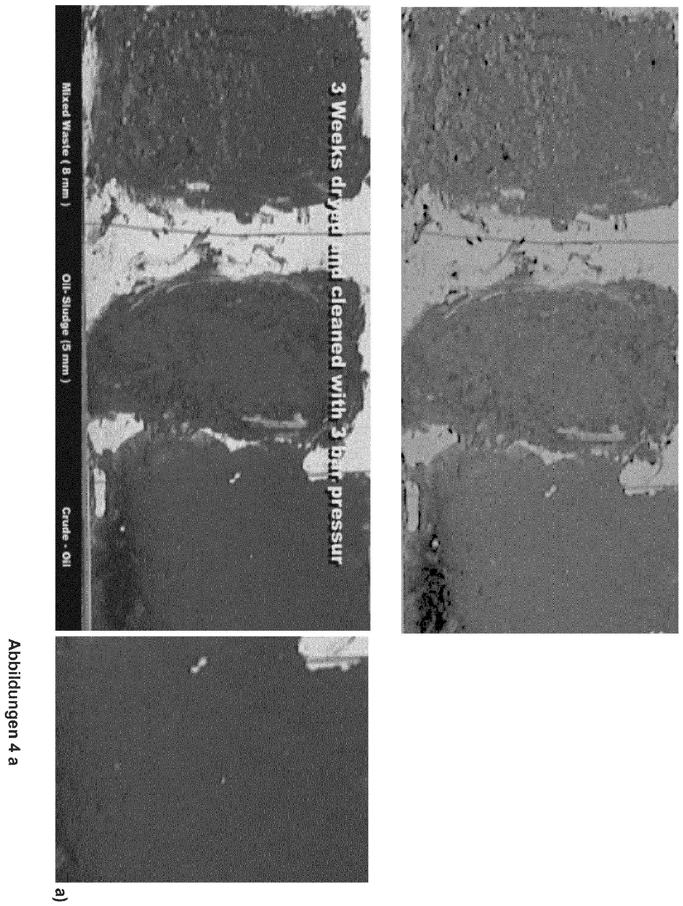

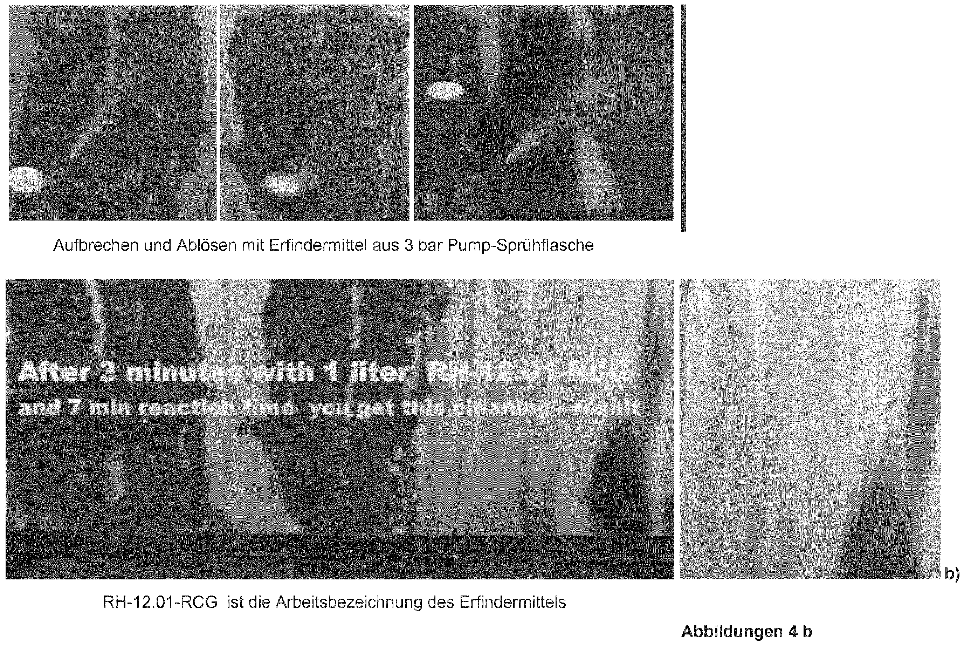

Abbildung 4 zeigt die Reinigung von drei verschiedenen Ölverschmutzungen auf Stahlblech mit Hilfe der erfindungsgemäßen Zusammensetzung (Zusammensetzung aus 90 Gew.-% Biodiesel (Soja), 10 Gew.-% technisches Bio-Ethanol und 5,5 mg/L Campher) der vorliegenden Erfindung. Dargestellt sind die Abbildungen vorher (Abbildung 4 A) und nachher (Abbildung 4 B). Man erkennt die nahezu vollständige Ablösung der Ölverschmutzung in Abbildung 4B (Flaschen-Pumpdruck: ca. 2,5 bar).

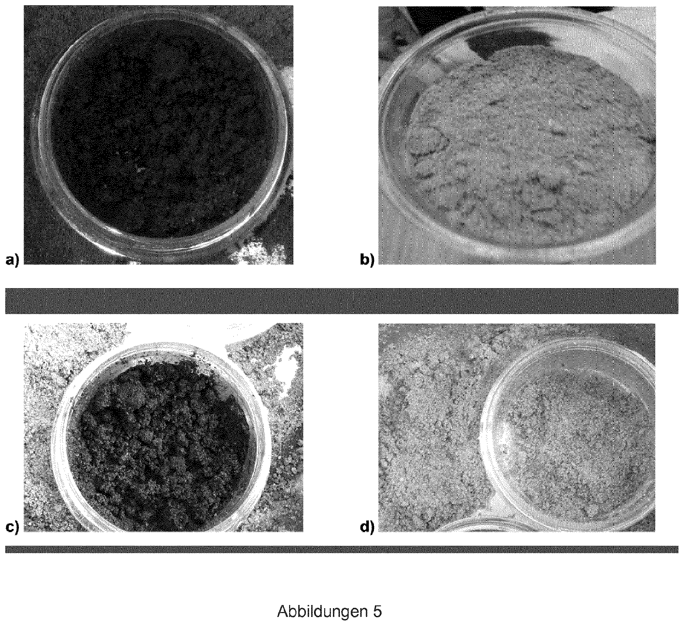

Abbildung 5 zeigt die Förderung von Erdöl aus Ölsand. a) Test 1: Ölsand vor Behandlung. b) Test 1: Ölsand nach Behandlung. c) Test 2: Ölsand vor Behandlung. d) Test 2: Ölsand nach Behandlung. Dabei wurde eine Zusammensetzung aus 80 Gew.-% Biodiesel, 20 Gew.-% technisches Bio-Ethanol und 5,5 mg/L Campher verwendet.

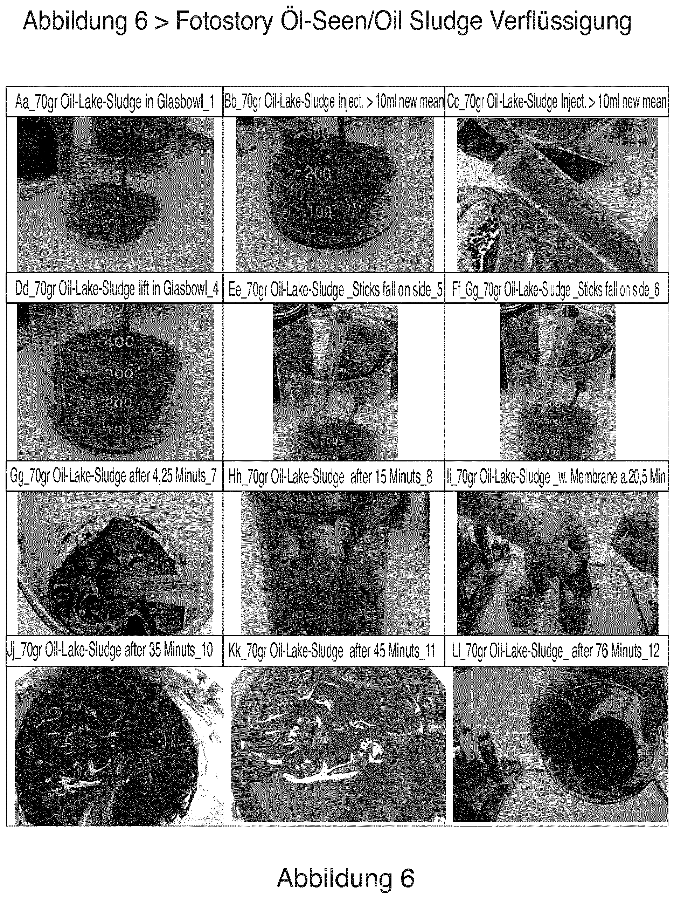

Abbildung 6 zeigt einen beispielhaften Test zur Anwendung der Zusammensetzung gemäß einer Ausführungsform. Dabei ist in der Abbildung detailliert die Verflüssigung von Oil-Sludge aus Öl-Seen (Oil-Lakes) gezeigt. Hierbei wurde eine Zusammensetzung aus 80 Gew.-% Biodiesel (Frittier-/Koch-fett/-Öl aus Asien, aus überwiegend pflanzlichen Fetten/Substanzen), 20 Gew.-% iso-Propanol und 5,55mg/L Campher verwendet.

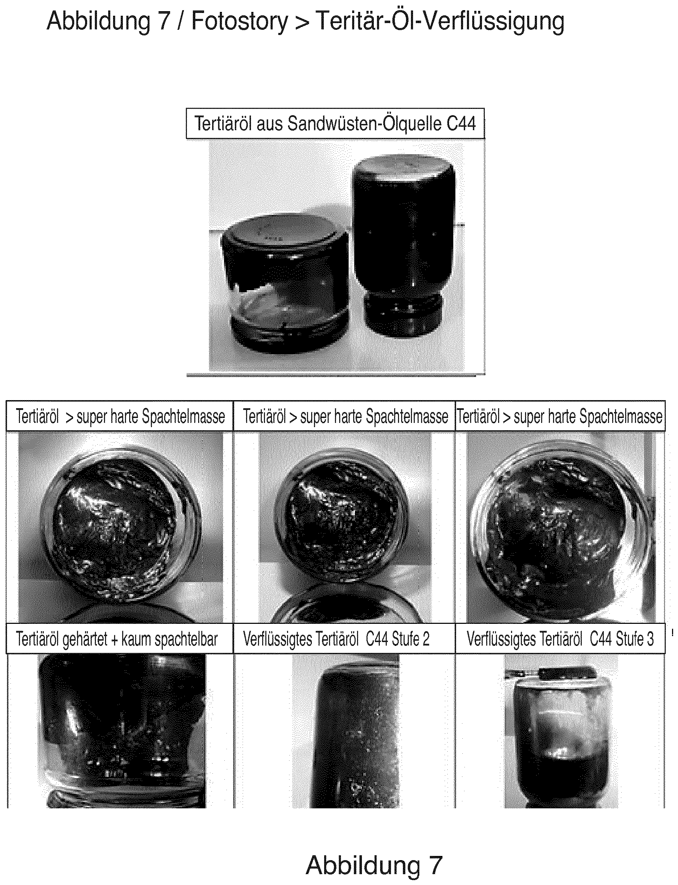

Abbildung 7 zeigt einen weiteren beispielhaften Test zur Anwendung der Zusammensetzung gemäß einer Ausführungsform. Dabei ist in der Abbildung detailliert ein Verflüssigungs-Test mit Tertitäröl aus Erdölquelle (entnommen aus versiegtem Bohrloch C44) gezeigt. Hierbei wurde eine Zusammensetzung aus 80 Gew.-% Biodiesel (Frittier-/Koch-fett/-Öl aus Asien, aus überwiegend pflanzlichen Fetten/Substanzen), 20 Gew.-% iso-Propanol und 5,55mg/L Campher verwendet.

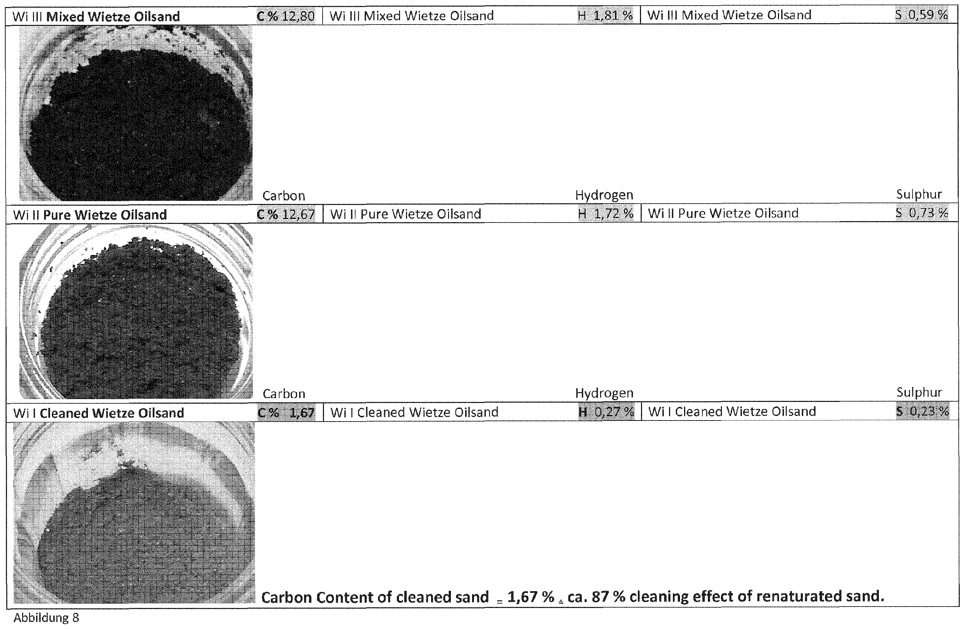

Abbildung 8 zeigt einen beispielhaften Test zur Anwendung der Zusammensetzung gemäß einer Ausführungsform. Dabei sind Test-Ergebnisse für ein Verfahren zur Renaturierung von Sand aus Öl-/Sand-Kombinationen gezeigt.

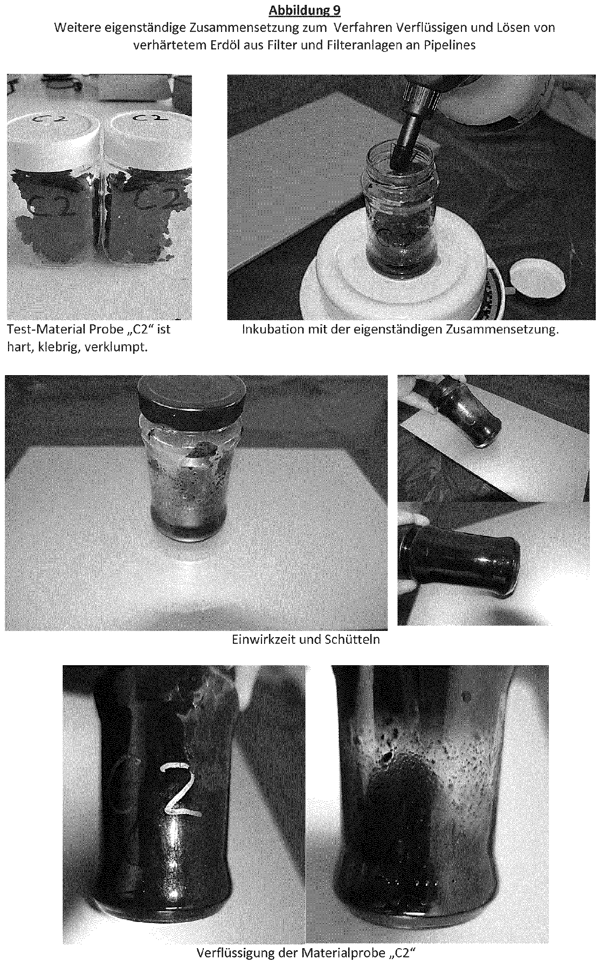

Abbildung 9 zeigt einen beispielhaften Test zur Anwendung einer Mischung, welche die Zusammensetzung umfasst gemäß einer Ausführungsform. Dabei ist ein Verfahren zur Verflüssigung und zum Lösen von verhärtetem, verklumptem Erdöl beispielsweise in Filter und Filteranlagen von z.B. Pipelines gezeigt.

### Detaillierte Beschreibung der Erfindung

Der Begriff "Erdöl", wie hierin verwendet, bezieht sich auf den dem Fachmann bekannten in der Erdkruste eingelagerten, und aus dieser gewonnenen, Rohstoff, auch Rohöl genannt, in sämtlichen Erscheinungsformen, und verschiedenen Formen an Erdölvorkommen, vor der Raffination. So umfasst der Begriff Erdöl zum Beispiel Leichtrohöl, das sich durch eine geringe Viskosität, und Schwerrohöl, das sich durch eine hohe Viskosität auszeichnet. Ebenso umfasst der Begriff Erdöl verschiedene Arten an Erdölvorkommen, zum Beispiel natürliches Bitumen, Ölsand, Asphaltseen, Öl-Seen, Öl-Schlämme, Öl-Schlacken sowie gebundenes Erdöl in flüssigen und festen Stoffen.

Der Begriff "Erdölrückstände", wie hierin verwendet, bezieht sich auf Komponenten des Erdöls, die sich bei der Förderung, dem Transport, der Lagerung, der Verarbeitung oder von Erdöl abtrennen, bzw. abgetrennt werden, ablagern oder ausfallen. Hierunter fallen zum Beispiel Paraffine, die sich typischerweise in Pipelines ablagern, oder Ölschlamm (Sludge), der sich in Erdöltanks bildet. Als Erläuterung sei hier auf eine Besonderheit bei den Erdöltanks und den Pipelines hingewiesen. Bei beiden bilden sich oftmals unter Paraffinrückständen sogenannte Wassersicken, in denen sich Wasser ablagert. Sowohl bei den Tanks am Boden und manchmal auch an den Wänden als auch bei den Pipelines vor den Flanschübergängen von Rohren bilden sich gefährliche Wassersicken, die bis zum Durchrosten der Behälter und Rohre führen können. Bei alten Tanks besteht zusätzlich die Gefahr, dass beim Reinigen mit zu hohem Druck nach einer Sandstrahlreinigung die Wände regelrecht durchschossen werden und dieser dann unbrauchbar wird, oder mit Stahlplatten aufwändig restauriert werden muss. All dies kann mit der erfindungsgemäßen Zusammensetzung vorgebeugt und reinigungstechnisch verhindert werden.

Der Fachmann erkennt, dass die in einem konkreten Fall mit umfasste Abweichung von einem expliziten genannten messbaren oder gemessenen Wert (beispielsweise Gew.-%) von der Messgenauigkeit abhängt, mit der der jeweilige Messwert bestimmt werden kann. In jeweils weiteren Ausführungsformen der konkreten Beispiele kann der explizit genannte Wert im Rahmen der Messgenauigkeit beispielsweise Abweichungen von ±20% oder ±10%, in einigen Fällen ±9%, ±8%, ±7%, ±6%, ±5%, ±4%, ±3%, ±2% oder ±1%, und in einigen Fällen ±0.9%,±0.8%, ±0.7%, ±0.6%, ±0.5%, ±0.4%, ±0.3%, ±0.2% oder ±0.1%, von dem explizit genannten Wert mit umfassen.

Unter Biodiesel wird vorliegend ein langkettiger Alkylester verstanden. Insbesondere kann es sich um langkettige Fettsäureester handeln. Der Biodiesel wird durch Umesterung pflanzlicher oder tierischer Fette und/oder Öle mit einwertigen Alkoholen gewonnen. Einwertige Alkohole können vorzugsweise Methanol, Ethanol oder Propanol sein. Ganz besonders bevorzugt ist Biodiesel, der als Fettsäuremethylester (FAME - Fatty Acid Methyl Ester) vorliegt. Dabei sind die Fettsäuren, des als Fettsäuremethylester ausgebildeten Biodiesels vorzugsweise C16- bis C18-Fettsäuren.

Der Begriff "ein Biodiesel" oder "einen Biodiesel", wie hierin verwendet, umfasst die Möglichkeit, dass lediglich eine Art von Biodiesel Teil der Zusammensetzung ist. Der Begriff umfasst jedoch ebenso eine Mischung aus 2 oder mehr, zum Beispiel 3, 4 oder 5 verschiedenen Biodieseln, bspw. unterschiedlich hergestellte Biodiesel. Unter dem Begriff Biodiesel wird hierin bevorzugt ein Biodiesel bezeichnet, der nicht der Norm DIN EN14214 unterliegt.

Der Begriff "umfasst", wie hierin verwendet, bezieht sich auf die dem Fachmann geläufige offene Formulierung, die bedeutet, dass die explizit genannten Bestandteile vorhanden sein müssen, jedoch ebenso weitere Bestandteile bzw. technische Merkmale vorhanden sein können. Soweit nichts Gegenteiliges beschrieben ist, schliesst der Begriff "umfasst" auch Ausführungsformen ein, die auf die explizit genannten Bestandteile bzw. technische Merkmale beschränkt sind, also aus diesen bestehen. Beispielhaft bedeutet dies, dass die Beschreibung einer Zusammensetzung, die die Komponenten A (z.B. Fettsäureesterfraktion) und B (z.B. Alkoholfraktion) umfasst, dem Fachmann sowohl Zusammensetzungen offenbart, die zusätzlich zu den Komponenten A und B weitere, nicht näher spezifizierte Komponenten enthalten, aber auch eine Zusammensetzung, die ausschließlich Komponenten A und B enthält.

Die im Folgenden beschriebenen verschiedenen Aspekte der vorliegenden Erfindung, Zusammensetzung, Verwendung und Verfahren, sind keinesfalls strikt isoliert zu betrachten, sondern können, bzw. müssen gegebenenfalls, in Kombination gelesen werden. Insbesondere können verschiedene Ausführungsformen oder technischen Merkmale eines Aspekts auch mit Ausführungsformen oder technische Merkmalen eines anderen Aspekts kombiniert werden.

### Die erfindungsgemäße Zusammensetzung

Die erfindungsgemäße Zusammensetzung umfasst eine Fettsäureesterfraktion und eine Alkoholfraktion. Die Fettsäureesterfraktion macht 70-95 Gewichtsprozent (Gew.-%) der erfindungsgemäßen Zusammensetzung aus. Vorzugsweise ergänzen sich die Anteile der Fettsäureesterfraktion und der Alkoholfraktion zu 100 Gew.-%, wobei Zusatzstoffe, bis zu 10g/L, vorzugsweise 8g/L, vorzugsweise 6g/L, vorzugsweise 4g/L, vorzugsweise 2g/L, vorzugsweise 1g/L, bei dieser Betrachtung nicht berücksichtigt werden.

Denkbar wäre beispielsweise, dass die Zusammensetzung 75 Gew.-% der Fettsäureesterfraktion und 25 Gew.-% der Alkoholfraktion, 80 Gew.-% der Fettsäureesterfraktion und 20 Gew.-% der Alkoholfraktion, oder 90 Gew.-% der Fettsäureesterfraktion und 10 Gew.-% der Alkoholfraktion enthält. Denkbar wäre selbstverständlich auch jede andere prozentuale Kombination aus Fettsäureesterfraktion und Alkoholfraktion, insbesondere mit den im vorhergehenden Absatz genannten Werten für die Anteile der beiden Fraktionen, wobei die Zusammensetzung ggf. weitere Komponenten enthalten kann, sodass sich die prozentualen Anteile der Fettsäureesterfraktion und der Alkoholfraktion nicht zu 100% addieren müssen, sich jedoch vorzugsweise zu 100% addieren.

Vorzugsweise bilden die Fettsäureesterfraktion und die Alkoholfraktion zusammen 100 Gew.-%, wobei zusätzlich ein oder mehrere Zusatzstoffe, insbesondere Campher, beigefügt ist bzw. sind.

Bevorzugt sind Ausführungsformen in denen die Fettsäureesterfraktion 75, 76, 77, 78, 79, 80, 81, 82, 83, 84, 85, 86, 87, 88, 89 oder 90 Gew.-% der Zusammensetzung ausmacht. In weiteren bevorzugten Ausführungsformen macht die Fettsäureesterfraktion 80 bis 90 Gew.-% der Zusammensetzung aus. Der Fachmann versteht, dass sämtliche sich aus den oben explizit genannten Gewichtsprozenten ergebenden Bereiche ebenso offenbart sind. Zum Beispiel macht die Fettsäureesterfraktion in manchen Ausführungsformen 75 bis 90 Gew.-% oder 73 bis 87 Gew.-% der Zusammensetzung aus.

In allen Ausführungsformen der erfindungsgemäßen Zusammensetzungen kann die Fettsäureesterfraktion einen oder mehrere Fettsäuremethylester umfassen.

In allen Ausführungsformen der erfindungsgemäßen Zusammensetzungen kann die Fettsäureesterfraktion die Methylester und/oder Ethylester von Fettsäuren mit zwischen 12 und 24, bevorzugt zwischen 16 und 18, Kohlenstoffatomen umfassen. Bevorzugt sind hierbei Fettsäuremethylester. Besonders bevorzugt sind Methylester von Fettsäuren zwischen 16 und 18 Kohlenstoffatomen. In manchen Ausführungsformen sind die Fettsäuremethylester linear unverzweigt.

In allen Ausführungsformen der erfindungsgemäßen Zusammensetzungen kann die Fettsäureesterfraktion einen oder mehrere der Fettsäuremethylester, Hexadecansäuremethylester, Octadecansäuremethylester, 9-Octadecensäuremethylester, 9,12-Octadecadiensäuremethylester, 9,12,15-Octadecatrieensäuremethylester, oder jegliche Kombination davon umfassen.

In allen Ausführungsformen der erfindungsgemäßen Zusammensetzungen kann die Fettsäureesterfraktion ein Biodiesel oder eine Mischung aus verschiedenen Biodieseln sein. Besonders bevorzugt sind Biodiesel die aus Raps oder Soja gewonnen sind, also Rapsölmethylester (RME), oder Sojaölmethylester (SME), oder aus Frittier-/Koch-fett/-Öl, das überwiegend aus pflanzlichen Fetten/Substanzen besteht, wie es bspw. im asiatischen Raum häufig verwendet wird. In einer weiteren Ausführungsform umfasst die Fettsäureesterfraktion wenigstens ein nicht raffiniertes, verestertes Pflanzenöl und/oder Pflanzenfett.

In allen Ausführungsformen der erfindungsgemäßen Zusammensetzungen kann die Fettsäureesterfraktion insbesondere einen vergleichsweise geringeren Glycerinanteil, das heißt, einen Glycerinanteil von weniger als 0,25 Gew.-%, aufweisen. Bevorzugt ist ein Glycerinanteil von weniger als 0,15 Gew.-%. Weiterhin hat die erfindungsgemäße Fettsäureesterfraktion insbesondere einen vergleichsweise geringen Wasseranteil, das heißt, einen Wasseranteil von weniger als 500 mg/kg. Bevorzugt sind weniger als 170 mg/kg. Die erfindungsgemäße Fettsäureesterfraktion ist insbesondere frei oder im Wesentlichen frei von Glycerin und/oder Wasser.

Die erfindungsgemäße Zusammensetzung umfasst eine Alkoholfraktion, die 30, 25, 20, 15, 10 oder 5 Gew.-% der Zusammensetzung ausmacht.

Bevorzugt sind Ausführungsformen in denen die Alkoholfraktion, vorzugsweise wenigstens, 25, 24, 23, 22, 21, 20, 19, 18, 17, 16, 15, 14, 13, 12, 11 oder 10 Gew.-% der Zusammensetzung ausmacht. Besonders bevorzugt sind Ausführungsformen in denen die Alkoholfraktion etwa 10 bis etwa 20 Gew.-% der Zusammensetzung ausmacht. Der Fachmann versteht, dass sämtliche sich aus den oben explizit genannten Gewichtsprozenten ergebende Bereiche ebenso offenbart sind. Die Alkoholfraktion der Zusammensetzung kann daher beispielsweise 10 bis 25 Gew.-% oder 13 bis etwa 22 Gew.-% der Zusammensetzung ausmachen.

Die Alkoholfraktion der erfindungsgemäßen Zusammensetzung umfasst Ethanol (Ethanol umfasst dabei Bio-Ethanol und/oder Technisches Ethanol und/oder Technisches Bio-Ethanol und/oder vergälltes Bio-Ethanol) und/oder iso-Propanol. Besonders bevorzugt ist iso-Propanol.

Besonders bevorzugte Ausführungsformen der erfindungsgemäßen Zusammensetzung umfassen 80 Gew.-% Biodiesel und 20 Gew.-% iso-Propanol, 81 Gew.-% Biodiesel und 19 Gew.-% iso-Propanol, 82 Gew.-% Biodiesel und 18 Gew.-% iso-Propanol, 83 Gew.-% Biodiesel und 17 Gew.-% iso-Propanol, 84 Gew.-% Biodiesel und 16 Gew.-% iso-Propanol, 85 Gew.-% Biodiesel und 15 Gew.-% iso-Propanol, 86 Gew.-% Biodiesel und 14 Gew.-% iso-Propanol, 87 Gew.-% Biodiesel und 13 Gew.-% iso-Propanol, 88 Gew.-% Biodiesel und 12 Gew.-% iso-Propanol, 89 Gew.-% Biodiesel und 11 Gew.-% iso-Propanol, 90 Gew.-% Biodiesel und 10 Gew.-% iso-Propanol, 91 Gew.-% Biodiesel und 9 Gew.% iso-Propanol, 92 Gew.-% Biodiesel und 8 Gew.-% iso-Propanol, 93 Gew.-% Biodiesel und 7 Gew.-% iso-Propanol, 94 Gew.-% Biodiesel und 6 Gew.-% iso-Propanol, oder 95 Gew.-% Biodiesel und 5 Gew.-% iso-Propanol.

Erfindungsgemäß besteht die Zusammensetzung aus 70-90 Gew.-% Biodiesel, und dem entsprechenden Rest technischem Bio-Ethanol, sowie zwischen 0,5 - 20mg/L Campher als Zusatzstoff. Nach einer erfindungsgemäßen Alternative besteht die Zusammensetzung aus 70-95 Gew.-% Biodiesel, und dem entsprechenden Rest iso-Propanol, sowie zwischen 0,5 - 20mg/L Campher als Zusatzstoff.

Bevorzugt ist insbesondere eine Zusammensetzung aus 74-86 Gew.-%, vorzugsweise 76-84 Gew.-%,78-82 Gew.-% Biodiesel, und dem entsprechenden Rest technischem Bio-Ethanol sowie zwischen 1,5 - 18mg/L, insbesondere 3 - 15mg/L, 4 - 10mg/L, 4,5 - 8mg/L Campher als Zusatzstoff.

Bevorzugt ist auch eine Zusammensetzung aus 80 Gew.-% Biodiesel, 20 Gew.-% technischem Bio-Ethanol sowie 5,55 mg/L Campher. Bevorzugt ist auch eine Zusammensetzung aus 90 Gew.-% Biodiesel, 10 Gew.-% technischem Bio-Ethanol sowie 5,55mg/L Campher.

Bevorzugt ist ferner insbesondere eine Zusammensetzung aus 75-95 Gew.-%, vorzugsweise 80-94 Gew.-%,85-92 Gew.-%,88-91 Gew.-% Biodiesel, und dem entsprechenden Rest iso-Propanol sowie zwischen 0,5 - 20mg/L, insbesondere 1,5 - 18mg/L, 3 - 15mg/L, 4 - 10mg/L, 4,5 - 8mg/L Campher als Zusatzstoff.

Ganz besonders bevorzugt ist ferner eine Zusammensetzung aus 90,0 Gew.-%Biodiesel, 10,0 Gew.-%iso-Propanol sowie 5,5 mg/L Campher. Bevorzugt ist auch eine Zusammensetzung aus 80 Gew.-% Biodiesel, 20 Gew.-% iso-Propanol sowie 5,55mg/L Campher.

Bei sämtlichen Ausführungsbeispielen der Zusammensetzung beträgt die Menge an Campher als Zusatzstoff 0,5-- 20mg/L. Ganz besonders bevorzugt ist eine Menge an Campher zwischen 1,5 und 10 mg/L, insbesondere 3 bis 7,5 mg/L.

Der Fachmann versteht, dass im Rahmen der Messgenauigkeit die offene Formulierung "umfasst" auch zutreffend sein kann, wenn die Summe der Anteile der Fettsäureesterfraktion und der Alkoholfraktion 100 Gew.-% ergibt, d. h., dass trotzdem ein kleiner Spurenanteil weiterer Komponenten vorhanden sein kann, aber selbstverständlich nicht sein muss.

Bevorzugte Ausführungsformen der erfindungsgemäßen Zusammensetzung umfassen Campher. Bevorzugt sind hierbei Ausführungsformen in denen Campher in der erfindungsgemäßen Zusammensetzung in einer Menge von 0,1 bis 10,0 mg/L, von 0,2 bis 7,5 mg/L, oder von 0,5 bis 5,0 mg/L, jeweils bezogen auf die Gesamtmenge der Zusammensetzung vorliegt. Besonders bevorzugt ist eine Menge an Campher von 0,5 bis 7,5 mg/L. Bevorzugterweise liegt bei allen Ausführungsformen die minimale Menge an Campher bei 0,7, 0,9, 1,1, 1,3, 1,5, 1,7, 1,9, 2,1, 2,3, 2,5, 3,0, 3,5, 3,7, 4,0, oder 4,5 mg/L, bezogen auf die Gesamtmenge der Zusammensetzung, und die maximale Menge an Campher bei 5,0, 5,5, 6,0, 6,5, 7,0, 7,5, 8,0, 8,5, 9,0, 9,5 oder 10,0 mg/L, bezogen auf die Gesamtmenge der Zusammensetzung. Der Fachmann versteht, dass jegliche sich aus den oben genannten minimalen Mengen und maximalen Mengen ergebenen Bereiche Teil der Erfindung sind, so zum Beispiel von 1,1 bis 9,0 mg/L oder von 2,5 bis 8,0 mg/L. Insbesondere sind die Bereiche bevorzugt, die sich ergeben aus der Kombination der bevorzugten minimalen Menge an Campher von 0,5 mg/L mit den explizit genannten maximalen Mengen an Campher ergeben. Weiter Bevorzugt sind die Bereiche, die sich aus der Kombination der bevorzugten maximalen Menge an Campher von 7,5 mg/L mit den explizit genannten minimalen Mengen an Campher ergeben. Insbesondere wird eine Menge von 5,55 mg/L Campher bevorzugt.

In einer besonders bevorzugten Ausführungsform der erfindungsgemäßen Zusammensetzung enthält die Zusammensetzung einen Biodiesel mit einem Anteil von höchstens 80 oder 85 oder 90 Gew.-% und iso-Propanol mit einem Anteil von mindestens 10 oder 15 oder 20 Gew.-% und 0,5 mg/L bis 7,5 mg/L Campher, bezogen auf die Gesamtmenge der Zusammensetzung. Insbesondere bevorzugt sind 5,55 mg/L Campher. Bevorzugt ist insbesondere eine Zusammensetzung aus 80 Gew.-% Biodiesel, 20 Gew.-% technischem Bio-Ethanol sowie 5,55 mg/L Campher. Bevorzugt ist auch eine Zusammensetzung aus 90 Gew.-% Biodiesel, 10 Gew.-% technischem Bio-Ethanol sowie 5,55mg/L Campher

Bevorzugt ist auch eine Zusammensetzung aus 90,0 Gew.-% Biodiesel, 10,0 Gew.-% iso-Propanol sowie 5,5 mg/L Campher. Bevorzugt ist schließlich eine Zusammensetzung aus 80 Gew.-% Biodiesel, 20 Gew.-% iso-Propanol sowie 5,55mg/L Campher.

Wie oben erwähnt, versteht der Fachmann, dass eine Summe von 100 Gew.-% der Fettsäureesterfraktion und der Alkoholfraktion, zum Beispiel Biodiesel und iso-Propanol, nicht ausschließt, dass eine oder mehrere weitere Komponenten, zum Beispiel Campher, bis zu einer Menge von 100 mg/L, bezogen auf die Gesamtmenge der Zusammensetzung, mit umfasst ist. Anders ausgedrückt, wird die Komponente Campher der erfindungsgemäßen Zusammensetzung bis zu einer Menge von 100 mg/L, bezogen auf die Gesamtmenge der Zusammensetzung, bezüglich der Gesamtmasse der Zusammensetzung für die Angabe der Menge der Fettsäureesterfraktion und der Alkoholfraktion, vernachlässigt.

Die erfindungsgemäße Zusammensetzung ist bevorzugt nicht oxidierend. Die Zusammensetzung weist bevorzugt eine Dichte von 850 bis 910 g/L, insbesondere 861 bis 900 g/L, weitere insbesondere zwischen 862 und 875 g/L, auf. Die Zusammensetzung kann vorzugsweise eine Dichte von 878 bis 895 g/L, oder von 880 bis 890 g/L auf. Die Selbst-Entzündungstemperatur der Zusammensetzung beträgt bevorzugt 225 °C. Die Zusammensetzung kann vorzugsweise eine Selbst-Entzündungstemperatur von 180 bis 220 °C oder 210 bis 260 °C aufweisen. Die Viskosität der Zusammensetzung liegt bevorzugt zwischen 3,0 und 5,0 (centi Stokes (cSt)), insbesondere zwischen 3,5 und 5,0 cSt oder zwischen 3,1 und 3,7 cSt, bei 40°C. Die Zusammensetzung kann eine Viskosität von 3,7 bis 4,8 cSt oder 4,0 bis 4,5 cSt aufweisen. Insbesondere kann die Viskosität zwischen 3,2 und 3,6 cSt liegen.

### Verwendung zur Verringerung der Viskosität von Erdöl und/oder Erdölrückständen sowie zum Lösen und Trennen von Erdöl und/oder Erdölrückständen von anderen flüssigen oder festen Stoffen.

Erfindungsgemäß ist auch die Verwendung der Zusammensetzung bzw. die Verwendung der oben beschriebenen Ausführungsformen der Zusammensetzung zur Verringerung der Viskosität von Erdöl und/oder Erdölrückständen.

Aus den oben genannten Gründen ist eine Verringerung der Viskosität von Erdöl und/oder Erdölrückständen sowohl bei der Förderung, dem Transport, der Lagerung oder der Verarbeitung von Erdöl wünschenswert. Insbesondere kann die erfindungsgemäße Zusammensetzung verwendet werden, um die Viskosität von Rohöl, zum Beispiel Schwerrohöl und Leichtrohöl, Ölschlamm, Bitumen, Öl Sand, bzw. in Ölsand gebundenes Erdöl zu verringern. Die erfindungsgemäße Zusammensetzung ist ebenfalls dazu geeignet, um Öl-Seen (Oil-Ponds) und/oder Erdöl oder Erdölrückstände von anderen flüssigen oder festen Stoffen zu lösen und/oder zu trennen.

Die erfindungsgemäße Zusammensetzung kann die Viskosität von Erdöl oder Erdölrückständen um 95 %, 90 %, 85 %, 80 %, 75 %, 70 %, 65 %, 60 %, 55 %, 50 %, 45 %, 40 %, 35 %, 30 %, 25 %, 20 %, 15 %, 10 % oder 5 % verringern. In manchen Ausführungsformen verringert die Zusammensetzung die Viskosität von Erdöl oder Erdölrückständen um 70 % oder höher.

Um die Viskosität von Erdöl und/oder Erdölrückständen unter Verwendung der Zusammensetzung zu verringern, kann die Zusammensetzung mit dem Erdöl und/oder den Erdölrückständen in Kontakt gebracht werden. Hierzu können dem Fachmann bekannte Verfahren verwendet werden. Zur Verringerung der Viskosität von Erdöl kann die Zusammensetzung zum Beispiel mittels Injektionsbohrungen in die Erdöllagerstätte gepresst werden. Zur Verringerung der Viskosität von Erdölrückständen, zum Beispiel Ölschlamm, kann die Zusammensetzung in zum Beispiel einen Erdöltank eingebracht werden. Die Zusammensetzung kann zum Beispiel in einen Erdöltank eingebracht werden, in dem sie auf die Erdölrückstände gesprüht wird.

Das Erdöl oder die Erdölrückstände können als Teil der Verwendung mit der Zusammensetzung für einen gewissen Zeitraum in Kontakt gebracht werden (inkubiert werden). Dieser Zeitraum kann einige Minuten, einige Stunden oder einige Tage betragen. Bspw. kann die Zusammensetzung mit dem Erdöl oder den Erdölrückständen für 1, 2, 3, 4, 5, 6, 7, 8, 9, 10, 15, 20, 25, 30, 35, 40, 45, 50, 55 oder 60 Minuten inkubiert werden. Die Zusammensetzung kann mit dem Erdöl oder den Erdölrückständen auch für 1, 2, 3, 4, 5, 6, 7, 8, 9, 10, 11, 12, 13, 14, 15, 16, 17, 18, 19, 20, 21, 22, 23 oder 24 Stunden inkubiert werden. Die Zusammensetzung kann mit dem Erdöl oder den Erdölrückständen auch für 1, 2, 3, 4, 5, 6 oder 7 Tage inkubiert werden. In manchen Ausführungsformen kann die Inkubation mechanisch unterstützt werden, zum Beispiel durch Rühren, Schütteln, Sprühen, Kratzen und/oder Schaben.

Die erfindungsgemäße Zusammensetzung kann in einer Menge von 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34 oder 35 Gew.-% bezogen auf die Menge an Erdöl oder Erdölrückständen hinzugefügt werden. Bevorzugt ist das Hinzufügen der Menge der erfindungsgemäßen Zusammensetzung von 5 bis 15 Gew.-% bezogen auf die Menge an Erdöl in einer Erdöllagerstätte (Tagesproduktions-Summe), oder einem Öl-See, oder in Erdölrückständen in einem Erdöltank, z.B. Kesselwagen oder Öl-Tanker, oder in anderen vorkommenden Erdölrückständen, zum Beispiel beim Recycling von Erdöl aus anderen Erdölrückständen in flüssigen und festen Stoffen.

In einer Ausführungsform aller erfindungsgemäßen Verfahren und Verwendungen, kann der viskositätsverringernde Effekt der erfindungsgemäßen Zusammensetzung durch eine Erhöhung der Temperatur beschleunigt werden. Bevorzugt sind hierbei Temperaturen von wenigstens 18°C, 25°C, 30°C, 40°C, 50°C, 60°C, 70°C, 80 °C, 90°C oder wenigstens 100°C, wobei diese Temperaturen vorzugsweise jedenfalls während der Inkubation bzw. dem Einwirken der Zusammensetzung herrscht. Besonders bevorzugt sind Temperaturen zwischen 25°C und 59,5°C.

### Verfahren zur Entfernung von Erdölrückständen von einer Oberfläche

Erfindungsgemäß ist ferner ein Verfahren zur Entfernung von Erdölrückständen von einer Oberfläche. Das Verfahren umfasst die Schritte a) In Kontakt bringen der erfindungsgemäßen Zusammensetzung mit den Erdölrückständen, b) Inkubation der Zusammensetzung mit den auf der Oberfläche vorhandenen Erdölrückständen, um ein Produkt mit verringerter Viskosität zu erhalten, und c) Entfernen des Produkts von der Oberfläche.

In manchen Ausführungsformen ist die Oberfläche ein Erdöltank und das in Kontakt Bringen umfasst das Einbringen der Zusammensetzung in den Erdöltank.

Ein Erdöltank im Sinne diese Erfindung kann jegliches Gefäß zur vorübergehenden oder langfristigen Lagerung von Erdöl sein. Ebenso kann ein Erdöltank auch dem Transport von Erdöl dienen. Beispielhaft kann ein Erdöltank ein Tanker (ein Schiff, das Erdöl transportiert) oder ein Kesselwagen (ein Zugwagon, der Erdöl transportiert) sein.

Der Inkubationszeitraum kann einige Minuten, einige Stunden oder einige Tage betragen. Die Zusammensetzung kann mit dem Erdöl oder den Erdölrückständen für 1, 2, 3, 4, 5, 6, 7, 8, 9, 10, 15, 20, 25, 30, 35, 40, 45, 50, 55 oder 60 Minuten inkubiert werden. Die Zusammensetzung kann mit dem Erdöl oder den Erdölrückständen auch für 1, 2, 3, 4, 5, 6, 7, 8, 9, 10, 11, 12, 13, 14, 15, 16, 17, 18, 19, 20, 21, 22, 23 oder 24 Stunden inkubiert werden. Die Zusammensetzung kann mit dem Erdöl oder den Erdölrückständen auch für 1, 2, 3, 4, 5, 6 oder 7 Tage inkubiert werden.

Das in Kontakt bringen kann zum Beispiel mittels Sprühen, Gießen, Wischen, Spritzen oder Streichen geschehen. Dies hängt von der jeweiligen Oberfläche sowie der Natur der Erdölrückstände und dem jeweiligen Equipment ab.

Zum Beispiel können Sprühanlagen verwendet werden, um die Zusammensetzung in den Erdöltank einzubringen. Die Zusammensetzung kann auf Erdölrückstände aufgesprüht werden. Das Aufsprühen kann unter erhöhtem Druck erfolgen. Der erhöhte Druck kann zum Beispiel sein 1, 2, 3, 4, 5, 6, 7, 8, 9, 10, 11, 12, 13, 14, 15, 16, 17, 18, 19, 20 oder 21 bar.

Der erhöhte Druck kann in einem Bereich von 10 bis 20, von 10 bis 30, von 10 bis 40, von 10 bis 50, von 50 bis 100, von 50 bis 150, oder von 50 bis 200 bar liegen. Die gleichen Drücke gelten für andere Arten von Oberflächen.

Der Inkubationsschritt kann mechanisch unterstützt werden. Zum Beispiel können die Zusammensetzung und die Erdölrückständen, die in Kontakt gebracht wurden, abgekratzt, abgeschabt, gerührt, geschüttelt oder in anderer Form agitiert werden, um so den Prozess der Verringerung der Viskosität zu unterstützen bzw. beschleunigen.

Das erhaltene Produkt mit verringerter Viskosität kann von der Oberfläche abgewischt, abgesaugt, abgepumpt, abgesprüht, abgekratzt oder abgeschabt werden.

Zum Beispiel kann im Falle eines Erdöltanks das erhaltene Produkt mit verringerter Viskosität abgepumpt und dies dann zum Beispiel dem normalen Raffinationsprozess zugeführt werden.

Nach dem erfindungsgemäßen Verfahren verbliebene Erdölrückständen können zum Beispiel mechanisch, wie oben beschrieben, entfernt werden. Die Menge der nicht mittels des erfindungsgemäßen Verfahrens entfernbaren Erdölrückstände kann zwischen 3 % und 8 % der gesamten Menge an Erdölrückständen, zum Beispiel Sand und Verschmutzungen im Ölschlamm, liegen.

Weitere Vorteile lassen sich wie folgt zusammenfassen:
90% bis 100 %, insbesondere 90% bis 98%, der Erdölrückstände, zum Beispiel Ölschlamm, können durch die Verwendung der Zusammensetzung recycelt und/oder raffiniert werden. Eine kostenintensive Entsorgung von Ölrückständen ist nicht mehr notwendig. Eine kostenintensive Behandlung der Rückstände kann auf weniger als 10% der Erdölrückstände reduziert werden. Die Umweltverschmutzung auf ein Minimum reduziert. Die langsame mechanische Entfernung von hoch viskosen oder festen Komponenten kann unter Verwendung der Erfindung um bis zu 90% reduziert werden, was typischerweise bis zu 65% der üblichen Zeit einspart.

Weitere Gebiete der Anwendung erschließen sich wie folgt: Im Allgemeinen können durch die Verwendung der erfindungsgemäßen Verfahren bzw. Zusammensetzung Erdölrückstände effizienter, schneller und umweltschonender von Oberflächen entfernt werden als der Stand der Technik dies unter Verwendung von Chemikalien und/oder Wasser kann. Dies betrifft insbesondere Erdöltanks, Eisenbahntanks, Schifftanks, und ähnliche Behälter, welche eine regelmäßige Entfernung von Erdölrückständen bedürfen. Hierbei ist es besonders sinnvoll, zum Beispiel Orbitaldüsentechnik (360°C schwenkbar) mit flexibler Mischdüse einzusetzen. Auf diese Weise kann mit dieser Technik in jeder Hinsicht Material gespart werden. Besonders sinnvoll kann es sein, wenn der Erdöltank mit einer beheizbaren Bodenplatte und/oder einem Rührwerk betrieben werden kann. Dadurch wird der Gesamtprozess beschleunigt.

Nach einer Werkzeugreinigung oder Oberflächenreinigung per Hand empfiehlt es sich, die ölbehafteten Handflächen gründlich mit Wasser und milder (ph-neutral) Seifenlauge zu säubern und anschließend die Hände einzucremen.

### Verfahren zur Förderung von Erdöl

Zur Erfindung gehört ferner ein Verfahren zur Förderung von Erdöl, welches die Injektion der erfindungsgemäßen Zusammensetzung in eine Erdöllagerstätte umfasst.

Wie oben beschrieben, besteht unter anderem, großes Interesse daran, sich auch konventionelle Erdöllagerstätten in einer sekundären und tertiären Förderphase effektiv und möglichst umfassend zu erschließen. Insbesondere in der tertiären Förderphase wird vor allem versucht, hochviskoses Erdöl förderbar zu machen. Das erfindungsgemäße Verfahren erlaubt zum Beispiel in der tertiären Förderphase die Viskosität der Erdölvorkommen in der Erdöllagerstätte zu verringern, oder aber auch möglicherweise gebundenes Erdöl vorab in der Erdöllagerstätte zu lösen, um anschließend das vorhandene Erdöl an die Oberfläche pumpen zu können. Die Zusammensetzung wird hierbei mittels einer Injektionsbohrung in die Erdöllagerstätte gepresst und dadurch das Erdöl aus dem Reservoir förderbar. Hierzu können in vielen Fällen die aus dem Stand der Technik bekannten Vorrichtungen, Verfahren und Apparate verwendet werden.

Das Einbringen der erfindungsgemäßen Zusammensetzung in die Erdöllagerstätten zum Beispiel mittels Injektion und die Förderung der erfindungsgemäßen Zusammensetzung zusammen mit dem Erdöl bietet, aufgrund der hierin vorgestellten Eigenschaften der erfindungsgemäßen Zusammensetzung auch den Vorteil, dass die verwendeten Bohrköpfe, Bohrgestänge, Pipelines, Rohre und Behälter während des Betriebs von Erdölrückständen gereinigt werden, bzw. sich in geringerem Maße Erdölrückstände bilden. Aufgrund der reduzierten Viskosität vereinfacht sich ebenso der Transport des geförderten Erdöls zu den Raffinerien. Insbesondere lagern sich weniger Erdölrückstände an Flanschübergängen und Rohrmuffen, insbesondere auch in Pipelines, ab. Daher müssen diese Elemente nicht oder nur in geringerem Maße beheizt werden. Auch die Intervalle zur mechanischen Entfernung von Erdölrückständen verringern sich. Insgesamt ist es auch möglich, den Ertrag aus den Erdöllagerstätten durch den Einsatz der Zusammensetzung zu erhöhen und die Produktivität in der Erdölförderung, dem Transport und der Weiterverarbeitung zu steigern.

### Verfahren zur Förderung von Erdöl aus Ölsand-Vorkommen

Zur Erfindung gehört ferner ein Verfahren zur Förderung von Erdöl aus Ölsand. Dieses Verfahren umfasst das a) In Kontakt Bringen eines Ölsands mit der erfindungsgemäßen Zusammensetzung, b) Inkubation der Zusammensetzung mit dem Ölsand, um das im Ölsand gebundene Erdöl zu lösen, und c) Trennung des gelösten Erdöls von anderen flüssigen und/oder festen Stoffen.

In manchen Ausführungsformen umfasst das In Kontakt bringen, das Mischen eines Ölsands mit der erfindungsgemäßen Zusammensetzung in einem Behälter. In manchen Ausführungsformen umfasst die Inkubation der Zusammensetzung mit dem Ölsand das Rühren oder Schütteln der Mischung aus Zusammensetzung und Ölsand.

Der Inkubationszeitraum, das heißt die Dauer der Inkubation, kann einige Minuten, einige Stunden oder einige Tage betragen. Die Zusammensetzung kann mit dem Ölsand für vorzugsweise wenigstens 1, 2, 3, 4, 5, 6, 7, 8, 9, 10, 15, 20, 25, 30, 35, 40, 45, 50, 55 oder 60 Minuten inkubiert werden. Die Zusammensetzung kann mit dem Ölsand auch für vorzugsweise wenigstens 1, 2, 3, 4, 5, 6, 7, 8, 9, 10, 11, 12, 13, 14, 15, 16, 17, 18, 19, 20, 21, 22, 23 oder 24 Stunden inkubiert werden. Die Zusammensetzung kann mit dem Ölsand auch für vorzugsweise wenigstens 1, 2, 3, 4, 5, 6 oder 7 Tage inkubiert werden.

Die Trennung des gelösten Erdöls von Feststoffen kann zum Beispiel mithilfe von Filtern oder Sieben geschehen. Hierzu kann der Fachmann auf die ihm bekannten Lösungen aus dem Stand der Technik zurückgreifen.

Die erfindungsgemäßen Verwendungen und Verfahren können bei unterschiedlichen Temperaturen durchgeführt werden, so kann zum Beispiel die Inkubation der Erdölrückständen mit der Zusammensetzung oder die Inkubation des Ölsands mit der Zusammensetzung bei unterschiedlichen Temperaturen durchgeführt werden. Typischerweise unterstützt eine erhöhte Temperatur die Verringerung der Viskosität des Erdöls oder der Erdölrückstände. Die Verwendungen und Verfahren können zum Beispiel bei wenigstens 15, 20, 25, 30, 35, 40, 45, 50, 55, 60, 65, 70, 75, oder 80 °C durchgeführt werden. Vorzugsweise bei maximal 150°C. Besonders bevorzugt ist die Durchführung der Verwendungen und Verfahren bei einer Temperatur von 25 °C bis 65 °C. In manchen Ausführungsformen können die Verfahren und Verwendungen in einem Bereich von 50 °C bis 100 °C durchgeführt werden.

Für die effektivere Trennung von Öl und Sand mit der erfindungsgemäßen Zusammensetzung können zum Beispiel Mehrfach-Dekanter oder Trikanter, die zur mechanischen Trennung von festen und flüssigen Stoffen dienen, eingesetzt werden.

### Verfahren zum Lösen von Ablagerungen und/oder Erdölrückständen in Erdöl-Pipelines

Pipelines gelten als Hauptschlagadern der Weltwirtschaft. Im Gegensatz zu anderen Transportmitteln müssen sie als Transportbehälter nicht bewegt werden, sondern das Medium in ihnen. Im Gegensatz zu anderen Transportmitteln, sind Pipelines die günstige und produktive Alternative, vor allem auch im Zusammenhang mit der möglichen zu transportierenden Menge, die sich durch die Leitung pumpen lässt. Allerdings sind die Pipeline-Transportkosten sehr stark abhängig vom Durchsatz und Durchmesser der zur Verfügung stehenden Leitung. Auch die variablen Kosten wie Reinigung, Energie und Wartung schlagen sich auf die Betreiberkosten nieder.

Zum Beispiel reduzieren Ablagerungen und/oder Erdölrückstände wie zum Beispiel Paraffine in Pipelines in denen Erdöl befördert wird, den Durchmesser/Leitungsquerschnitt der Leitung erheblich und vermindern dadurch den Durchsatz. Auch können unter Umständen unter den Paraffinrückständen sogenannte Wassersicken auftreten, in denen sich Wasser ablagert, dies wiederum besonders an Flanschübergängen der Leitungen gefährlich ist. Sehr aufwändige und kostenintensive, mechanische Reinigungsvorgänge an den Leitungen sorgen für einen entsprechenden Durchfluss. Doch auch diese mechanischen Reinigungen können nicht langfristig einen anhaltenden Durchsatz der Leitungen garantieren.

Die in die Leitung eingebrachte erfindungsgemäße Zusammensetzung mit bspw. wenigstens 2,5, 3,0, 3,5, 4,0, 4,5, 5,0, 5,5, 6,0, 6,5, 7,0, 7,5, 8,0, 8,5, 9,0, 9,5, oder 10,0 Gew.-% bis 12 Gew.-% bezogen auf die Menge an in der Pipeline befindlichen Erdöl und/oder Erdölrückständen, löst zum Beispiel Ablagerungen, dies ist teilweise sogar während des normalen Pipeline-Betriebs möglich. Die erfindungsgemäße Zusammensetzung vermischt sich in der Leitung mit dem Erdöl und löst die Erdölrückstände und/oder Ablagerungen. Eine Weiterverarbeitung in der Raffinerie kann somit erfolgen. In besonderen Ausführungsformen verringert die in die Leitung eingebrachte erfindungsgemäße Zusammensetzung, die Viskosität des in der Pipeline befindlichen Erdöls um 20 %, 25 %, 30 %, 35 %, 40 %, 45 %, 50 %, 55 % oder 60 %, dadurch lässt sich die Durchflussgeschwindigkeit des Erdöls in der Pipeline steigern. In manchen Ausführungsformen haben Faktoren wie zum Beispiel Durchflussgeschwindigkeit, Temperatur und Einwirkzeit eine Auswirkung auf das Wirkungsergebnis. Als dauerhaft in die Leitung eingebrachter Zusatz, bewirkt die erfindungsgemäße Zusammensetzung, eine anhaltende Reduktion von erneuten Ablagerungen in der Leitung, dadurch entstehen weitere entsprechende Vorteile. Bestehende Arbeitssysteme des konventionellen Pipelinebetriebs können dabei möglicherweise in vollem Umfang genutzt werden.

Mögliche weitere Effekte die durch das hier beschriebene Verfahren erzielt werden können sind zum Beispiel eine Erhöhung des Pipeline-Durchsatzes, eine Reduzierung der Karbon- und/oder Glycerin-Absonderungen besonders an den Pumpstationen und Flanschübergängen der Leitungen, eine Reduzierung des Arbeitsdrucks (während des Arbeitsdurchsatzes), eine Reduzierung von Stromverbrauch der Pumpen und/oder Heizschleifen, eine Reduzierung des zeitlichen und finanziellen Aufwands der herkömmlich, mechanischen Reinigung oder der Schutz der Leitungen vor Rekontamination.

### Verfahren zum Lösen. Trennen und Fördern von Erdöl aus Öl-Seen. Oil-Sludge und/oder aus den darin enthaltenen flüssigen und/oder festen Erdölrückständen.

Seitdem die Menschheit in der Lage ist nach Erdöl zu suchen, zu bohren, zu fördern, zu transportieren und zu nutzen, gibt es auch unmittelbare Umwelt-Auswirkungen die daraus entstehen. Durch Satellitentechnik ist es erst vor Jahren möglich geworden, das weltweite Ausmaß der Auswirkungen auf die Umwelt in der Nähe oder im Zusammenhang stehenden Lagen von zum Beispiel Förderstellen, Tanklagern, Raffinerien oder Pipelines zu erkennen. Erdöl, das an den genannten Umfeldern zum Beispiel durch Unfälle, Materialermüdung, Aufschütten oder menschlichem oder technischem Versagen oberflächlich, also bis zu 2, 4, 6, 8 oder 10 Meter auslagerte, sich erschloss oder ausgebracht wurde und in Form von sogenannten Öl-Seen (Oil-Lakes/Oil-Ponds) und/oder Oil-Sludge (Öl-Schlamm) brach liegt und die Umwelt gefährdet, kann unter Anwendung der erfindungsgemäßen Zusammensetzung und dem hier beschriebenen Verfahren nutzbar gemacht werden. Hierbei ist es nicht zwingend notwendig, chemische Zusätze oder Wasser aufwendig zu trennen und zu filtern, da beides nicht eingesetzt werden muss und/oder insoweit man es zuvor nicht bereits eingesetzt hat. Durch das Zunutze machen des in dieser Form brachliegenden Erdöls, ist es unter Umständen sogar möglich, über Jahre und Jahrzehnte keine neuen Erdöl-Bohrungen vornehmen zu müssen, ohne dem anhaltenden Bedarf an Erdöl nicht gerecht werden zu können.

Das Erdöl und/oder die Erdölrückstände in Öl-Seen und Oil-Sludge sind äußerst hart. Sie sind zum Teil auch mit Tertiäröl aus stillgelegten Erdölquellen vergleichbar, deren Deckschicht zum Teil ebenso ausgehärtet ist. Der Viskositätswert weist daher zum Teil extrem hohe Werte von bis zu 9.000 mm²/s (cSt), oder in manchen Fällen sogar noch höher, auf. Während man bei den versiegten Tertiärölquellen die erfindungsgemäße Zusammensetzung zum Lösen und Trennen in die Ölquelle injizieren kann, sollte man bei dem hier beschriebenen Verfahren zum Lösen, Trennen und Fördern von Erdöl aus einem Öl-See und/oder Oil-Sludge anders vorgehen. Um zum Beispiel nicht das Grundwasser durch den Verflüssigungsprozess zu gefährden, ist es ratsam einen ausgehärteten oder teils noch flüssigen Inhalt eines sogenannten Öl-Sees, Schritt für Schritt auszubaggern und für die Anwendung zwischengelagert in einem zum Beispiel Lagergefäß und/oder Lagerdepot zur Verfügung zu stellen.

Die erfindungsgemäße Zusammensetzung kann mit dem Erdöl und/oder den Erdölrückständen (z.B. aus Oil-Sludge) für wenigstens 1, 2, 3, 4, 5, 6, 7, 8, 9, 10, 15, 20, 25, 30, 35, 40, 25 45, 50, 55 oder 60 Minuten inkubiert werden. Es ist auch möglich die Zusammensetzung mit dem Erdöl und/oder den Erdölrückständen (z.B. aus Oil-Sludge) für wenigstens 1, 2, 3, 4, 5, 6, 7, 8, 9, 10, 11, 12, 13, 14, 15, 16, 17, 18, 19, 20, 21, 22, 23 oder 24 Stunden zu inkubieren. Die Zusammensetzung mit dem Erdöl und/oder den Erdölrückständen (z.B. aus Oil-Sludge) auch für wenigstens 1, 2, 3, 4, 5, 6 oder 7 Tage inkubiert werden.

Die Einwirkphase der Zusammensetzung in, zum Beispiel, Oil-Sludge kann insbesondere zwischen wenigstens 5, 6, 7, 8, 9, 10, 11, 12, 13, 14, 15, 16, 17, 18, 19, 20, 25, 30, 35, 40, 45 oder 48 Stunden und 100 Stunden dauern. Dabei ist eine Dosierung der Zusammensetzung von wenigstens 2,5, 3, 3,5, 4, 4,5, 5, 5,5, 6, 6,5, 7, 7,5, 8, 8,5, 9, 9,5, 10, 10,5, 11 11,5, 12, 12,5, 13, 13,5, 14, 14,5 oder 15 Gew.-%, vorzugsweise und höchstens 20 Gew.-% bezogen auf die Menge zum Beispiel des Oil-Sludge. Die Zusammensetzung wird hierbei in manchen Ausführungsformen so eingesetzt wie in Beispieltest Abbildung 6 beschrieben. Bei besonderen Ausführungsformen ist durch eine mögliche Erwärmung der Zusammensetzung und/oder zum Beispiel des Oil-Sludge eine Beschleunigung der Einwirkphase möglich. Für die Weiterverarbeitung können zum Beispiel Mehrfach-Dekanter oder Trikanter, die, Stand der Technik, zur mechanischen Trennung von festen und flüssigen Stoffen dienen, eingesetzt werden.

### Verfahren zur Gewinnung von gereinigtem Sand aus ÖI-/Sand-Kombinationen für eine mögliche Renaturierung des gereinigten Sand

Das Verfahren ist ein unabhängiger und jederzeit vornehmbarer Verfahrens-Schritt zum Beispiel nach einem möglichen Prozess zur Gewinnung von Erdöl aus Öl-/Sand-Kombinationen. Beispielhafte Einsatzgebiete sind; Natürliche Ölsandvorkommen zum Beispiel in Kanada oder Venezuela, das Sand-Umfeld bei und/oder von Öl-Seen (Oil-Ponds), Öl-Laken (aus Leckagen) auf Sanduntergrund wie zum Beispiel bei Pipelines und im Umfeld von Erdöl-Förderstellen, Sand der auf oder über natürlichen Öl-Depots liegt oder auf oder über künstlichen Öl-Depots aufgebracht wurde sowie natürliche und/oder künstlich angelegte Sandstrände, die durch äußere Umstände wie zum Beispiel Tankerunfälle oder Ölkatastrophen verunreinigt werden/wurden.

Durch die Verfahrenskombination aus ein- oder mehrfachem Hinzufügen der erfindungsgemäßen Zusammensetzung zur, zum Beispiel in einem Lagergefäß und/oder Lagerdepot ausgebaggerten und eingebrachten und zur Verfügung gestellten, Öl-/Sand-Kombination, dem ein- oder mehrfachen Erhitzen der mit der Zusammensetzung getränkten Öl-/Sand-Kombination, Rühren und/oder Schütteln, Filtern, ein- oder mehrfachem Hinzufügen von vorzugsweise reinem Technischem Bio-Ethanol und dem Trocknungsprozess, wird der Erdölanteil und/oder die Erdölrückstände aus der Öl-/Sand-Kombination gelöst und getrennt. Für eine effektivere Trennung können zudem zum Beispiel Mehrfach-Dekanter oder Trikanter, die zur mechanischen Trennung von festen und flüssigen Stoffen dienen, in dem Verfahren eingesetzt werden. Durch das hier beschriebene Verfahren ist es möglich gereinigten Sand aus Öl-/Sand-Kombinationen zu gewinnen, der bspw. für eine mögliche Renaturierung geeignet sein kann.

Um eine Renaturierung des bisher gereinigten Sandes zu ermöglichen, kann ein weiterer optionaler Verfahrensschritt durchgeführt werden.

### Beispiele:

### 1. Durchführung einer Erdöltankreinigung

Die erfindungsgemäße Zusammensetzung bzw. eine Ausführungsform der Zusammensetzung wird in einen Erdöltank durch die schon am Tank fest installierten Hochdrucksprühanlagen oder mit industriellen Hochdruckreinigern eingebracht. Die Zusammensetzung beginnt schon beim Aufsprühen auf die Wandungen des Tanks ihre viskositätsverringernden Eigenschaften zu entfalten. Die Zusammensetzung wird bei einer Einwirkzeit von 8 Stunden (denkbar wäre auch eine Einwirkzeit statt 8h, 9h, 10h, 11h, 12h, 13h, 14h, 15h, 16h, 17h, 18h, 19h, 20h, 21h, 22h, 23h, 24h) und einer Temperatur der Zusammensetzung zwischen 40°C und 60°C mit 7,5 % der erfindungsgemäßen Zusammensetzung, bezogen auf die Menge des Sludges am Tankboden und an den verschmutzten Wänden, versprüht. Nach einem empfohlenen 3-maligen Reinigungszyklus ist eine Sättigung der Erdölrückstände von ca. 70 % erreicht und die Ablagerungen auf ein pumpfähiges Niveau gebracht. Denkbar wäre auch statt 7,5 % der Zusammensetzung, 8,0 %, 8,5 %, 9,0 %, 9,5 % oder 10 % zu verwenden. Eine weitere Möglichkeit ist es, das entstandene Gemisch aus der Zusammensetzung mit dem aus den Erdölrückständen gewonnenen, grob sprühfähigem Erdöl in einem Zirkulationsprozess solange im Umlauf zu halten und auf die Oberflächen zu sprühen, bis die Wandungen des Tanks gereinigt sind. Anschließend wird die erfindungsgemäße Zusammensetzung mit dem verflüssigten Ölschlamm nach einigen Reinigungsvorgängen aus dem Tank gepumpt. Einige Öllagertanks haben zusätzlich Heizschleifen im Boden, was den Reinigungszyklus beschleunigt und den Abpumpvorgang früher einleitet.

Sind die Wandungen des Tanks gereinigt und der Ölschlamm am Boden aufgeweicht, kann der Pumpvorgang zum Beispiel mittels einer Saugschwimmer-Stutzen-Pumpe eingeleitet werden, sobald die Viskosität des Schlamms in ausreichendem Maße verringert wurde. Die Mischung wird über einen Rückführungsprozess in und aus dem Tank gepumpt. Dieser Umlauf wird fortgesetzt, bis alle Schlammschichten verflüssigt worden sind, das heißt, die Viskosität in einem solche Maße reduziert wurde, dass der gesamte Ölschlamm abgepumpt werden kann, also pumpfähig ist.

Der Einsatz von Rührwerken kann zur Beschleunigung des Verfahrens (Beschleunigung der Verringerung der Viskosität) beitragen. Insbesondere nach Reinigen der Tankwände und vor Reinigen der Sohle in Abhängigkeit von dem Tanktyp können Rührwerke montiert werden. Die Verwendung dieser Einrichtungen beschleunigt den Prozess. Nachdem die Viskosität des Ölschlamms in ausreichendem Maße verringert wurde, kann das gesamte pumpfähige Produkt zur Raffination in die Raffinerie geleitet werden. Lediglich die nicht durch Pipelines pumpfähigen Substanzen müssen entsorgt werden. Dies ist die Grundlage für den ökonomischen und ökologischen Wert dieses Prozesses.

### 2. Reduzierung der Viskosität von Erdöl durch die erfindungsgemäße Zusammensetzung

Dieser Test wurde bei 40 °C durchgeführt. 2,0 g einer Ausführungsform der erfindungsgemäßen Zusammensetzung (90,0 mg/L Biodiesel (Soja), 10,0 mg/L iso-Propanol, 5,5 mg/L Campher) wurde mit 18,1 g Rohöl (Deutsches Rohöl aus Wietze mit 1.226 mPa•s.) gemischt und 5 Minuten gerührt. Danach ergab sich ein Messwert von 730 mPa•s. und nach weiteren 5 Minuten ergab sich ein Messwert von knapp 400 mPa•s. Nun wurde das Gemisch in einem Zylinder-Rheometer (Typ MCR 300) über einen Zeitraum von 20 Minuten von 20 ° C auf 40 ° C erwärmt. Über diesen Zeitraum verringerte sich die Viskosität des Gemisches von 400 mPa•s auf 125 mPa•s. Das Ergebnis ist in Abbildung 1 dargestellt. Die Viskosität sinkt auf 1/3 der ursprünglichen Viskosität und bleibt dann konstant. Abbildung 2 zeigt das Ergebnis des hier angeführten Tests in der Langzeitwirkung über mehr als 18 Stunden. Nach Sättigung zeigt der leichte Anstieg der Kurve nach 16 Stunden einen Messwert von s über 150mPas. Abbildung 2 zeigt somit die langanhaltende Stabilität der erreichten Viskosität.

### 3. Bestimmung der optimalen Mengen der erfindungsgemäßen Zusammensetzung

Deutsches Rohöl aus Wietze mit 1.226 mPa•s. wurde mit verschiedenen Mengen einer Ausführungsform der erfindungsgemäßen Zusammensetzung vermischt und jeweils 5 Minuten eingerührt. Die Behandlungstemperatur betrug jeweils 59,5 °C. Aus diesem Test, hier beschrieben die Beimischung mit 5 % der Zusammensetzung mit einer Einwirkdauer von 45 Minuten und der Beimischung mit 20 % der Zusammensetzung mit einer Einwirkdauer von 5 Minuten. Anschließend wurde die Viskosität gemessen. Die Ergebnisse sind in Abbildung 3 dargestellt. Die Dauer der Messungen betrug 30 Minuten. Die Ergebnisse zeigen konstante Viskositätswerte. Abbildung 3 zeigt, dass die 5 % Beimischung der Zusammensetzung der Erfindung die Viskosität deutlich stärker erniedrigt als die 20 % Beimischung der Zusammensetzung.

### 4. Beispiele für die Entfernung von Erdölrückständen

Es wurden verschiedene Experimente durchgeführt, z. B. mit Sand und Öl. In allen Experimenten war die Entfernung der Ölkontaminationen quantitativ.

Hier gezeigt wird ein Experiment mit
- deutscher Ölschlacke einer großen Raffinerie vermischt mit indischem Ölschlamm (I)
- stark paraffinhaltigem Ölschlamm aus Indien (II) und
- deutschem Rohöl aus Wietze (III).

Alle Materialien wurden auf ein großes Stahlblech mit 4 cm hohem Rand aufgetragen und liegend 3 Wochen in der Sonne getrocknet. Dann wurde der Test am stehenden Blech durchgeführt. Abbildung 4 a zeigt von links nach rechts die "Mixed Waste" Ölschlacke 8 mm dick (I), danach den "Sludge" Ölschlamm 5 mm dick (II) und rechts das getrocknete Rohöl 2,5 mm dick (III). Abbildung 4 b zeigt, mit einem knappen Liter der erfindungsgemäßen Zusammensetzung (Arbeitsbezeichnung RH-12.01-RCB) wurden mit 2,8 Bar Druck in 3 Minuten die Schlamm- und Schlackeschicht aufgebrochen und die Oberfläche von den Erdölrückständen gesäubert. Es verblieb eine Reaktionszeit von 7 Minuten nach dem Einsprühen. Abbildung 4 b zeigt das Ergebnis der Behandlung. Das getrocknete Rohöl wurde nahezu vollständig entfernt.

Je nach Art und Menge des Erdölrückstands können die Verwendungen und Verfahrens der Erfindung angepasst werden. Zum Beispiel kann die Zusammensetzung unter erhöhtem Druck, z. B. 3, 6, 12, 24, 48, 80 oder 90 bar auf den Erdölrückständen aufgebracht werden. Ebenso kann die Inkubationszeit und/oder möglicherweise die Temperaturen variiert werden. Obwohl die erfindungsgemäße Zusammensetzung einem hohen Druck standhält, benötigt man weit weniger Druck für die Entfernung von Erdölrückständen als mit Wasser. Tankwände älteren Datums werden geschont, da auch unter 90 Bar gearbeitet werden kann. Üblicherweise liegen die untersten Einstellstärken zwischen 90 und 180 bar. Bei den Heizschleifen in Raffinerien werden kurzfristig bei hohen Gradzahlen und bei hohem Druck "Spülmittel" durch die Heizschleifen gespült. Dabei besteht die Möglichkeit, die erfindungsgemäße Zusammensetzung dahingehend zu optimieren, das Restwasser und Restsauerstoff eine untergeordnete Rolle spielen.

### Bevorzugte Zusammensetzung

### 5. Eine besonders bevorzugte Zusammensetzung der vorliegenden Erfindung bestehend aus 80 Gew.-% Biodiesel (Soja), 20 Gew.-% iso-Propanol und 5,55 mg/L Campher hat folgende physikalische und chemische Eigenschaften:

| Physikalischer Zustand bei 22°C Aggregatszustand | flüssig |
|---|---|
| Farbe | farblos bis qelb oder rotbräunlich |
| Geruch | nahezu geruchsneutral |
| Siedepunkt | Final Boiling Point (FBP) 302,5°C bis 570°C bei 1.013 mbar nach ASTM D7169; Initial Boiling Point (IBP) 81,3°C |
| Flammpunkt | 18,5°C, nach EN ISO 2719 (bei Vergasung nach ISO 13736:2008, sonst bei offener Flamme nicht brennbar) |
| spontane Entflammbarkeit | Selbstentzündungstemperatur 255°C +/- 5°C; Verzögerung 60 Sekunden; die Temperatur erhöhte sich in der Mitte des Gefäßes um ca. 14°C |
| oxidative Eigenschaften | Keine |
| explosive Eigenschaften | keine |
| Dampfdruck, 100°F | 7,8 kPa, bei 100 °F nach ASTM D5191 |
| Dichte kq/m3 bei 15 °C | 863.8 kq/m3 nach DIN EN ISO 12185 |
| Wasserlöslichkeit (g/l) | Unlöslich/vernachlässigbar |
| Verteilunqskoeffizent n-Octanol/Wasser | (LOBP O/W): 6,2 |
| Viskosität bei 40°C, cSt | 3.234 cSt nach ASTM D7042 |
| Viskosität bei 20°C, cSt | 5.147 cSt nach ASTM D7042 |
| Wasserqehalt KF-Coulometric | 718 mg/kg nach EN ISO12937 |
| Stockpunkt | -12°C nach ISO3016 |
| Dampfdruck (DVPE) bei 100°F | 7.8 kPa nach ASTM D5191 |

### 6. Verfahren zur möglichen Renaturierung von Sand aus Öl-/Sand- Kombinationen (Abbildung 8)

Abbildung 8 zeigt die Labor-Ergebnisse dieses Tests und Fotos. Es handelt sich hierbei um zwei unabhängige Sandreinigungstests mit den gleichen Grundmaterialien die innerhalb von einem Jahr durchgeführt wurden. Beide Tests liefen nach dem gleichen Schema ab und mit vergleichbarem Equipment. Die Einwirkzeiten und die Arbeitstemperaturen waren geringfügig unterschiedlich. Deshalb wird hier lediglich der Öl-Sand-Test 2 beschrieben.

Als Equipment diente ein temperaturgesteuertes Fondueset mit fest integrierter äußerer Auffangschale. Es wurde in einem Glas mit Deckel und einer Einwirkzeit von mindestens 45 Minuten und maximal 8 Stunden und idealerweise 90 Minuten, natürlicher deutscher Ölsand mit einem Schuss deutschem Rohöl aus Wietze, eingeweicht. Hierbei wurde eine Menge von 125 Gramm natürlicher deutscher Ölsand plus einem Schuss deutschen Rohöls in ein Glas getan und mit 25 ml einer Ausführungsform der erfindungsgemäßen Zusammensetzung inkubiert (80 Gew% Biodiesel, 20 Gew.-% technisches Bio-Ethanol sowie 5,55 mg/L Campher).

### Hauptvorgehensweise;

Die Gesamtmixtur aus dem Glas wurde mehrmals durch einen Goldfilter (mµ >1) gerührt (15 Min.) und mit technischem Bio-Ethanol aus einem Glas mit Eichstrich 25 ml, benetzt, damit die Gesamtmixtur rührfähig bleibt. Hierbei wurden grobe Sandkörner und kleine Steinchen entfernt bis der augenscheinliche schwarze Sand größtenteils nur noch aus Sandkörnern bestand. Leichte Ölschlammanteile waren jedoch noch vorhanden. Um diese auch noch zu Lösen und die festen Ölanteile weiter von den Sandkörnern zu trennen, wurde das halbgereinigte Gemisch in ein temperaturgesteuertes Fondue gegeben und in einer ersten Aufwärmphase kurzfristig auf 80 °C erwärmt. Hierbei wurde immer wieder eine kleine Menge technisches Bio-Ethanol aus dem 25 ml Glas auf das halbtrockene Gemisch gegossen.

Bei der zweiten Aufwärmphase empfiehlt es sich einen kleinen offenen hellen (innen) Zusatztopf auf einen temperaturgesteuerten Einplattenkocher zu stellen, der sowohl bei 60 °C als auch bei 70 °C und 80 °C funktioniert. Benötigt werden alle Temperaturstufen.

In dieser zweiten Phase wird das helle (innen) Fondueset auf eine Arbeitstemperatur zwischen 50 °C und 60 °C eingestellt. Die Arbeitstemperatur des Bodens vom offenen Zusatztopfes wird auf eine Temperatur zwischen 70 °C und 80 °C gebracht. Mit einem Minipfannenwender (Laborspachtel) wird die Sandmasse im Fondueset weiter umgerührt bis die Feuchtigkeit im Topf fast verdunstet ist. Dann kippt man wieder ein paar Tropfen technisches Bio-Ethanol aus dem 25 ml Glas hinzu. Diesen Vorgang wiederholt man 3 Mal, wobei die Arbeitstemperatur beim letzten Rührprozess 60 °C haben sollte.

Beim letzten Arbeitsgang wird der Sand länger im bereitgestellten offenen Topf auf dem Einplattenkocher erwärmt und getrocknet. Hierbei wird abwechselnd ein letztes Mal mit technischem Bio-Ethanol aus dem 25 ml Glas (eventuell neu aufgefüllt, obwohl man nur einen Teil benötigt) abgelöscht. Beendet wird dieser wechselseitige Vorgang wenn man leichte Zischlaute und man minimale Ploppeffekte vernimmt. Der bereits weiß werdende Sand wird in stabile, reißfeste Papier-Küchentücher gegeben um den Sand trocken zu reiben. Erst bei diesem letzten Arbeitsgang wird der Sand sichtbar weiß. Die Arbeitstemperatur beträgt zwischen 70 °C und 80 °C. Die 80 °C sollten nicht überschritten werden, da sich sonst das Restöl nicht, oder nur unsauber, vom Sand löst oder trennt. Das Ergebnis dieses ersten Durchgangs kann sich sehen lassen und ist zu 90 %, insbesondere bis zu 87%, gereinigter Sand. In zwei weiteren "Waschgängen" kann das Ergebnis um weitere 6 % bis 8 % gesteigert werden. Die Farbe des Sandes wird hierbei nur unwesentlich beeinflusst.

Um optional eine Renaturierung des bisher gereinigten Sandes zu ermöglichen, wird ein weiterer optionaler Verfahrensvorgang benötigt.

Eine besonders bevorzugte nicht erfindungsgemässe Zusammensetzung für dieses optionale Verfahren umfasst 70 Gew.-% Technisches Bio-Ethanol und 30 Gew.-% Biodiesel oder 80 Gew.-% Technisches Bio-Ethanol und 20 Gew.-% Biodiesel oder 90 Gew.-% Technisches Bio-Ethanol und 10 Gew.-% Biodiesel.

Eine Zugabe von Campher kann bei dieser nicht erfindungsgemässen Zusammensetzung entbehrlich sein.

### 7. Verfahren für die Verflüssigung und das Lösen von verhärtetem, verklumpten Erdöl und/oder Erdölresten von Filtern und/oder Filteranlagen, beispielsweise von Pipelines (Abbildung 9) Dieses Beispiel fällt nicht in den Anspruchsbereich der Erfindung.

Ziel des Tests ist es, eine hartnäckig kontaminierte Ölkruste (Klumpen) von einem Filter eines Pipeline-Filters zu verflüssigen.

Zunächst wurde ein Biodiesel auf 30°C vorerwärmt. In einem weiteren Schritt wurde eine 30%ige Essigsäure-Lösung, bestehend aus 70% iso-Propanol mit 30% Essigsäure, angesetzt. Diese Essigsäure-Lösung wurde zu 40% mit 60% der zuvor beschriebenen erfindungsgemäßen Zusammensetzung bestehend aus 80 Gew.-% Biodiesel (Kochfett) und 20 Gew.-% iso-Propanol und 5,55mg/L Campher vermischt. Diese Mischung wurde in ein Glas auf die Materialprobe aufgesprüht. Die Menge der Mischung lag dabei bei 7,5% des Gewichts der Materialprobe. Dann wurde die Probe durch 10 minütiges Schwenken und Schütteln vermischt. Der Test war erfolgreich. Die Materialprobe konnte verflüssigt werden. Sollte das Material wieder leicht aushärten und/oder verklumpen, so kann eine Zugabe von etwas reinem iso-Propanol die Probe sofort wieder flüssig gemacht werden.

Zur Anwendung dieses Verfahrens kann ein Metallfilter für eine Inkubationszeit von ca. 15-30 Minuten in die hier beschriebene Zusammensetzung getaucht werden. Um die Gesundheit (Dämpfe der Essigsäure) nicht zu gefährden, sollte dies bevorzugt in einem geschlossenen Behälter stattfinden, vorzugsweise über 25°C Umgebungstemperatur. Anschließend ist es denkbar, mit einem Hochdruckreiniger den Filter mit reinem iso-Propanol und/oder technischem Bio-Ethanol abzuspritzen. Dabei kann das iso-Propanol und/oder der technische Bio-Ethanol insbesondere erwärmt sein. Ferner kann das Abspritzen insbesondere bei unter 50bar, weiter insbesondere unter 40bar erfolgen.

Um die Verflüssigung zu verbessern bzw. beschleunigen kann die Ölkruste auch unter Zuhilfenahme mechanischer und/oder technischer Einrichtungen vom Filter sodann weiter abgetrennt werden.

Anstatt der oben beschriebenen Mischung kann auch eine Mischung aus 30% Lösung (70% iso-Propanol mit 30% Essigsäure) und 70% der zuvor beschriebenen erfindungsgemäßen Zusammensetzung bestehend aus 80 Gew.-% Biodiesel (Kochfett) und 20 Gew.-% iso-Propanol und 5,55mg/L Campher verwendet werden.

Besonders bevorzugt für die Mischung bzw. Mischungen für dieses Verfahren (insbesondere Filterreinigung von z.B. Pipelinefilteranlagen) ist Essigsäure als Lösungsmittel.

In manchen Ausführungsformen können allerdings zusätzlich oder alternativ zu Essigsäure auch Organische Säuren wie beispielsweise Apfelsäure, Milchsäure, Ascorbinsäure, Amminosäure, Citronensäure, Ameisensäure, Trifluoressigsäure, Trichloressigsäure, und/oder Scikimisäure Bestandteil der Lösung sein.

## Patentansprüche

1. Zusammensetzung, umfassend eine Fettsäureesterfraktion und eine Alkoholfraktion, **dadurch gekennzeichnet, dass** die Zusammensetzung aus 70-90 Gew.-% Biodiesel, wobei der Biodiesel als Fettsäuremethylester vorliegt, und dem entsprechenden Rest technischem Bio-Ethanol besteht, wobei die Zusammensetzung zusätzlich zwischen 0,5 - 20 mg/L Campher als Zusatzstoff umfasst, oder wobei die Zusammensetzung aus 70-95 Gew.-% Biodiesel, wobei der Biodiesel als Fettsäuremethylester vorliegt, und dem entsprechenden Rest iso-Propanol besteht, wobei die Zusammensetzung zusätzlich zwischen 0,5 - 20 mg/L Campher als Zusatzstoff umfasst,
wobei die Fettsäureesterfraktion einen oder mehrere Fettsäureester umfasst.

2. Zusammensetzung gemäß Anspruch 1, wobei die Fettsäureesterfraktion einen oder mehrere der folgenden Methylester umfasst:
a) 9-Octadecensäuremethylester,
b) 9,12-Octadecadiensäuremethylester und
c) 9,12,15-Octadecatrieensäuremethylester.

3. Zusammensetzung gemäß Anspruch 1 oder 2, wobei die Fettsäureesterfraktion einen oder mehrere Biodiesel, wobei der Biodiesel als Fettsäuremethylester vorliegt, umfasst oder aus diesem/diesen besteht und/oder wobei die Alkoholfraktion iso-Propanol und/oder Ethanol umfasst.

4. Zusammensetzung gemäß einem der vorhergehenden Ansprüche, wobei die Alkoholfraktion iso-Propanol und/oder Ethanol umfasst, und/oder wobei die Fettsäureesterfraktion wenigstens ein nicht-raffiniertes, verestertes Pflanzenöl und/oder Pflanzenfett umfasst oder aus diesem/diesen besteht.

5. Zusammensetzung gemäß Anspruch 3 oder 4, wobei das Ethanol Bio-Ethanol und/oder Technisches Ethanol und/oder Technisches Bio-Ethanol und/oder vergälltes Bio-Ethanol umfasst.

6. Verwendung der Zusammensetzung gemäß einem der vorhergehenden Ansprüche zur Verringerung der Viskosität von Erdöl und/oder von Erdölrückständen.

7. Verwendung der Zusammensetzung gemäß einem der vorhergehenden Ansprüche zum Lösen von Erdöl und/oder Erdölrückständen von anderen flüssigen und/oder festen Stoffen.

8. Verwendung der Zusammensetzung gemäß einem der vorhergehenden Ansprüche zum Trennen von Erdöl und/oder Erdölrückständen von anderen flüssigen und/oder festen Stoffen.

9. Verfahren zur Entfernung von Erdölrückständen von einer Oberfläche, wobei das Verfahren die folgenden Schritte umfasst:
a) In Kontakt bringen der Zusammensetzung gemäß einem der vorhergehenden Ansprüche mit den Erdölrückständen,
b) Inkubation der Zusammensetzung mit den auf der Oberfläche vorhandenen Erdölrückständen, um ein Produkt mit verringerter Viskosität zu erhalten, und
c) Entfernen des Produkts von der Oberfläche.

10. Verfahren gemäß dem vorigen Anspruch, wobei die Oberfläche ein Erdöltank ist und das In Kontakt bringen das Einbringen der Zusammensetzung in den Erdöltank umfasst.

11. Verfahren zur Förderung von Erdöl, wobei das Verfahren eine Injektion der Zusammensetzung gemäß einem der vorhergehenden Ansprüche in eine Erdöllagerstätte umfasst.

12. Verfahren zur Förderung von Erdöl, wobei das Verfahren die folgenden Schritte umfasst:
a) In Kontakt bringen des Erdöls und/oder Erdölrückständen mit der Zusammensetzung gemäß einem der vorhergehenden Ansprüche, ,
b) Inkubation der Zusammensetzung mit dem Erdöl, um die Viskosität des Erdöls und/oder Erdölrückstände zu verringern und das gebundene Erdöl von anderen flüssigen und/oder festen Stoffen zu lösen, und
c) Trennung des gelösten Erdöls von anderen flüssigen und/oder festen Stoffen.

13. Verfahren zur Förderung von Erdöl aus Ölsand-Vorkommen, wobei das Verfahren die folgenden Schritte umfasst:
a) In Kontakt bringen eines Ölsands mit der Zusammensetzung gemäß einem der vorhergehenden Ansprüche,
b) Inkubation der Zusammensetzung mit dem Ölsand, um die Viskosität des Erdöls und/oder Erdölrückstände zu verringern und um das im Ölsand gebundene Erdöl von anderen flüssigen und/oder festen Stoffen zu lösen, und
c) Trennung des gelösten Erdöls von anderen flüssigen und/oder festen Stoffen.

14. Verfahren zum Lösen von Ablagerungen und/oder Erdölrückständen in Erdöl-Pipelines, wobei das Verfahren die folgenden Schritte umfasst:
a) In Kontakt bringen der Ablagerungen und/oder Erdölrückständen in Pipelines mit der Zusammensetzung gemäß einem der vorhergehenden Ansprüche ,
b) Inkubation der Zusammensetzung mit den Ablagerungen und/oder Erdölrückständen, um die Viskosität des Erdöls und/oder Erdölrückstände zu verringern und um das gebundene Erdöl von anderen flüssigen und/oder festen Stoffen zu lösen, und
c) Trennung des gelösten Erdöls von anderen flüssigen und/oder festen Stoffen.

15. Verfahren zum Lösen, Trennen und Fördern von Erdöl aus Öl-Seen, Oil-Sludge und/oder aus den darin enthaltenen flüssigen und/oder festen Erdölrückständen, wobei das Verfahren die folgenden Schritte umfasst:
a) In Kontakt bringen des Erdöls und/oder Erdölrückstände mit der Zusammensetzung gemäß einem der vorhergehenden Ansprüche ,
b) Inkubation der Zusammensetzung mit dem Erdöl und/oder Erdölrückständen, um die Viskosität des Erdöls und/oder Erdölrückstände zu verringern und um das gebundene Erdöl gemäß von anderen flüssigen und/oder festen Stoffen zu lösen, und
c) Trennung des gelösten Erdöls von anderen flüssigen und/oder festen Stoffen.

16. Verfahren zur Gewinnung von gereinigtem Sand aus Öl-/Sand-Kombinationen für eine mögliche Renaturierung des gereinigten Sands, wobei das Verfahren die folgenden Schritte umfasst:
a) In Kontakt Bringen der Öl-/Sand-Kombination mit der Zusammensetzung gemäß einem der vorhergehenden Ansprüche ,
b) Inkubation der Zusammensetzung mit der Öl-/Sand-Kombination, um die Viskosität des Erdöls und/oder Erdölrückstände zu verringern und um das gebundene Erdöl von anderen flüssigen und/oder festen Stoffen zu lösen, und
c) Trennung des gelösten Erdöls von anderen flüssigen und/oder festen Stoffen,
d.) Säuberung des zuvor von gebundenem Erdöl gelösten und getrennten Sands mit der Zusammensetzung gemäß einem der vorhergehenden Ansprüche und/oder zum Beispiel technischem Bio-Ethanol, um den Sand für eine mögliche Renaturierung vorzubereiten.

## Claims

1. Composition comprising a fatty acid ester fraction and an alcohol fraction,
**characterized in that**
the composition consists of 70-90 wt.% biodiesel, the biodiesel being present as fatty acid methyl ester, and of the corresponding remainder technical bio-ethanol,
the composition additionally comprising between 0.5-20 mg/L camphor as an additive,
or the composition consisting of 70-95 wt.% biodiesel, the biodiesel being present as fatty acid methyl ester, and of the corresponding remainder isopropanol,
the composition additionally comprising between 0.5-20 mg/L camphor as an additive,
the fatty acid ester fraction comprising one or more fatty acid esters.

2. Composition according to claim 1, wherein the fatty acid ester fraction comprises one or more of the following methyl esters:
a) 9-octadecenoic acid methyl ester,
b) 9,12-octadecadienoic acid methyl ester and
c) 9,12,15-octadecatrienoic acid methyl ester.

3. Composition according to claim 1 or claim 2, wherein the fatty acid ester fraction comprises or consists of one or more biodiesel, wherein the biodiesel is present as fatty acid methyl ester, and/or wherein the alcohol fraction comprises isopropanol and/or ethanol.

4. Composition according to any of the preceding claims, wherein the alcohol fraction comprises isopropanol and/or ethanol, and/or wherein the fatty acid ester fraction comprises or consists of at least one unrefined esterified vegetable oil and/or vegetable fat.

5. Composition according to claim 3 or claim 4, wherein the ethanol comprises bioethanol and/or technical ethanol and/or technical bioethanol and/or denatured bioethanol.

6. Use of the composition according to any of the preceding claims for reducing the viscosity of crude oil and/or crude oil residues.

7. Use of the composition according to any of the preceding claims for loosening crude oil and/or crude oil residues from other liquid and/or solid substances.

8. Use of the composition according to any of the preceding claims for separating crude oil and/or crude oil residues from other liquid and/or solid substances.

9. Method for removing crude oil residues from a surface, wherein the method comprises the following steps:
a) bringing the composition according to any of the preceding claims into contact with the crude oil residues,
b) incubating the composition with the crude oil residues present on the surface to obtain a reduced-viscosity product, and
c) removing the product from the surface.

10. Method according to the preceding claim, wherein the surface is a crude oil tank and the action of bringing into contact comprises introducing the composition into the crude oil tank.

11. Method for producing crude oil, wherein the method comprises injecting the composition according to any of the preceding claims into a crude oil reservoir.

12. Method for producing crude oil, wherein the method comprises the following steps:
a) bringing the crude oil and/or crude oil residues into contact with the composition according to any of the preceding claims,
b) incubating the composition with the crude oil to reduce the viscosity of the crude oil and/or crude oil residues and to loosen the bound crude oil from other liquid and/or solid materials, and
c) separating the loosened crude oil from other liquid and/or solid substances.

13. Method for producing crude oil from oil sand deposits, wherein the method comprises the following steps:
a) bringing an oil sand into contact with the composition according to any of the preceding claims,
b) incubating the composition with the oil sand to reduce the viscosity of the crude oil and/or crude oil residues and to loosen the crude oil bound in the oil sand from other liquid and/or solid materials, and
c) separating the loosened crude oil from other liquid and/or solid substances.

14. Method for loosening deposits and/or crude oil residues in crude oil pipelines, wherein the method comprises the following steps:
a) bringing the deposits and/or crude oil residues in pipelines into contact with the composition according to any of the preceding claims,
b) incubating the composition with the deposits and/or crude oil residues to reduce the viscosity of the crude oil and/or crude oil residues and to loosen the bound crude oil from other liquid and/or solid materials, and
c) separating the loosened crude oil from other liquid and/or solid substances.

15. Method for loosening, separating and producing crude oil from oil lakes, oil sludge and/or from the liquid and/or solid crude oil residues contained therein, wherein the method comprises the following steps:
a) bringing the crude oil and/or crude oil residues into contact with the composition according to any of the preceding claims,
b) incubating the composition with the crude oil and/or crude oil residue to reduce the viscosity of the crude oil and/or crude oil residues and to loosen the bound crude oil from other liquid and/or solid matter, and
c) separating the loosened crude oil from other liquid and/or solid substances.

16. Method for recovering cleaned sand from oil/sand combinations for possible restoration of the cleaned sand, wherein the method comprises the following steps:
a) bringing the oil/sand combination into contact with the composition according to any of the preceding claims,
b) incubating the composition with the oil/sand combination to reduce the viscosity of the crude oil and/or crude oil residues and to loosen the bound crude oil from other liquid and/or solid matter, and
c) separating the loosened crude oil from other liquid and/or solid substances,
d.) cleaning the sand, which was previously loosened and separated from bound crude oil, using the composition according to any of the preceding claims and/or, for example, technical bio-ethanol, in order to prepare the sand for possible restoration.

## Revendications

1. Composition comprenant une fraction d'ester d'acide gras et une fraction d'alcool, **caractérisée en ce que**
la composition est constituée de 70 à 90 % en poids de biodiesel, le biodiesel étant présent en tant qu'ester méthylique d'acide gras, et le reste correspondant étant constitué de bioéthanol technique, la composition comprenant en outre entre 0,5 et 20 mg/L de camphre en tant qu'additif, ou la composition étant constituée de 70 à 95 % en poids de biodiesel, le biodiesel étant présent en tant qu'ester méthylique d'acide gras, et le reste correspondant étant constitué d'isopropanol, la composition comprenant en outre entre 0,5 et 20 mg/L de camphre en tant qu'additif,
la fraction d'ester d'acide gras comprenant un ou plusieurs esters d'acides gras.

2. Composition selon la revendication 1, dans laquelle la fraction d'ester d'acide gras comprend un ou plusieurs des esters méthyliques suivants :
a) ester méthylique de l'acide 9-octadécénoïque,
b) ester méthylique de l'acide 9,12-octadécadiénoïque et
c) ester méthylique de l'acide 9,12,15-octadécatriénoïque.

3. Composition selon la revendication 1 ou 2, dans laquelle la fraction d'ester d'acide gras comprend ou est constituée d'un ou de plusieurs biodiesels, le biodiesel étant présent en tant qu'ester méthylique d'acide gras, et/ou dans laquelle la fraction d'alcool comprend de l'isopropanol et/ou de l'éthanol.

4. Composition selon l'une des revendications précédentes, dans laquelle la fraction d'alcool comprend de l'isopropanol et/ou de l'éthanol, et/ou dans laquelle la fraction d'ester d'acide gras comprend ou est constituée d'au moins une huile végétale et/ou graisse végétale estérifiée non raffinée.

5. Composition selon la revendication 3 ou 4, dans laquelle l'éthanol comprend du bioéthanol et/ou de l'éthanol technique et/ou du bioéthanol technique et/ou du bioéthanol dénaturé.

6. Utilisation de la composition selon l'une des revendications précédentes pour réduire la viscosité du pétrole et/ou de résidus de pétrole.

7. Utilisation de la composition selon l'une des revendications précédentes pour détacher du pétrole et/ou des résidus de pétrole d'autres substances liquides et/ou solides.

8. Utilisation de la composition selon l'une des revendications précédentes pour séparer du pétrole et/ou des résidus de pétrole d'autres substances liquides et/ou solides.

9. Procédé permettant l'élimination de résidus de pétrole d'une surface, dans lequel le procédé comprend les étapes suivantes :
a) mise en contact de la composition selon l'une des revendications précédentes avec les résidus de pétrole,
b) incubation de la composition avec les résidus de pétrole présents sur la surface afin d'obtenir un produit à viscosité réduite, et
c) élimination du produit de la surface.

10. Procédé selon la revendication précédente, dans lequel la surface est un réservoir de pétrole et la mise en contact comprend l'introduction de la composition dans le réservoir de pétrole.

11. Procédé permettant l'acheminent de pétrole, dans lequel le procédé comprend l'injection de la composition selon l'une des revendications précédentes dans un gisement de pétrole.

12. Procédé permettant l'acheminent de pétrole, dans lequel le procédé comprend les étapes suivantes :
a) mise en contact du pétrole et/ou des résidus de pétrole avec la composition selon l'une des revendications précédentes,
b) incubation de la composition avec le pétrole afin de réduire la viscosité du pétrole et/ou des résidus de pétrole et de détacher le pétrole lié d'autres substances liquides et/ou solides, et
c) séparation du pétrole détaché d'autres substances liquides et/ou solides.

13. Procédé permettant l'acheminent de pétrole à partir de gisements de sable bitumineux, dans lequel le procédé comprend les étapes suivantes :
a) mise en contact d'un sable bitumineux avec la composition selon l'une des revendications précédentes,
b) incubation de la composition avec le sable bitumineux afin de réduire la viscosité du pétrole et/ou des résidus de pétrole et de détacher le pétrole lié dans le sable bitumineux d'autres substances liquides et/ou solides, et
c) séparation du pétrole détaché d'autres substances liquides et/ou solides.

14. Procédé permettant le détachement de dépôts et/ou de résidus de pétrole dans des pipelines pétroliers, dans lequel le procédé comprend les étapes suivantes :
a) mise en contact des dépôts et/ou des résidus de pétrole dans des pipelines avec la composition selon l'une des revendications précédentes,
b) incubation de la composition avec les dépôts et/ou les résidus de pétrole afin de réduire la viscosité du pétrole et/ou des résidus de pétrole et de détacher le pétrole lié d'autres substances liquides et/ou solides, et
c) séparation du pétrole détaché d'autres substances liquides et/ou solides.

15. Procédé permettant le détachement, la séparation et l'acheminement de pétrole à partir d'étangs bitumineux, de boues huileuses et/ou de résidus de pétrole liquides et/ou solides qu'ils contiennent, dans lequel le procédé comprend les étapes suivantes :
a) mise en contact du pétrole et/ou des résidus de pétrole avec la composition selon l'une des revendications précédentes,
b) incubation de la composition avec le pétrole et/ou les résidus de pétrole afin de réduire la viscosité du pétrole et/ou des résidus de pétrole et de détacher le pétrole lié d'autres substances liquides et/ou solides, et
c) séparation du pétrole détaché d'autres substances liquides et/ou solides.

16. Procédé permettant la récupération de sable nettoyé à partir de combinaisons huile/sable pour une éventuelle restauration du sable nettoyé, dans lequel le procédé comprend les étapes suivantes :
a) mise en contact de la combinaison huile/sable avec la composition selon l'une des revendications précédentes,
b) incubation de la composition avec la combinaison huile/sable afin de réduire la viscosité du pétrole et/ou des résidus de pétrole et de détacher le pétrole lié d'autres substances liquides et/ou solides, et
c) séparation du pétrole détaché d'autres substances liquides et/ou solides,
d) épuration du sable, préalablement détaché et séparé du pétrole lié, avec la composition selon l'une des revendications précédentes et/ou, par exemple, du bioéthanol technique, afin de préparer le sable à une éventuelle restauration.
